Europäisches Patentamt

European Patent Office

Office européen des brevets

(19)

(11) Veröffentlichungsnummer : **0 400 194 B1**

(12) **EUROPÄISCHE PATENTSCHRIFT**

(45) Veröffentlichungstag der Patentschrift :
23.08.95 Patentblatt 95/34

(51) Int. Cl.$^6$ : **G06F 9/38**

(21) Anmeldenummer : **89110032.3**

(22) Anmeldetag : **02.06.89**

(54) **Verfahren und Anordnung zur Bearbeitung von Sprungbefehlen in nach dem Fliessbandprinzip arbeitenden Datenverarbeitungsanlagen.**

(43) Veröffentlichungstag der Anmeldung :
05.12.90 Patentblatt 90/49

(45) Bekanntmachung des Hinweises auf die
Patenterteilung :
23.08.95 Patentblatt 95/34

(84) Benannte Vertragsstaaten :
**AT BE CH DE ES FR GB IT LI NL SE**

(56) Entgegenhaltungen :
**EP-A- 0 142 912**
**EP-A- 0 239 023**
**IBM TECHNICAL DISCLOSURE BULLETIN,
vol. 24, no. 4, September 1981, Seiten
1857-1858, New York, US; J.F. HUGHES:
"Branch on condition decoding with instruction queues empty"**

(56) Entgegenhaltungen :
**IBM TECHNICAL DISCLOSURE BULLETIN,
vol. 25, no. 3A, August 1982, Seiten 1289-1291,
New York, US; G.S. RAO: "Byte operand buffer for predicting the outcome of conditional
brances"
IBM TECHNICAL DISCLOSURE BULLETIN,
vol. 25, no. 1, Juni 1982, Seiten 130-133, New
York, US; J.J. LOSQ et al.: "Zero condition
code detection for early resolution of BCS and
BCRS"**

(73) Patentinhaber : **Siemens Nixdorf
Informationssysteme Aktiengesellschaft
Fürstenallee 7
D-33102 Paderborn (DE)**

(72) Erfinder : **Kern, Rolf, Dipl.-Ing.
Goethering 44
D-8018 Grafing (DE)**

(74) Vertreter : **Fuchs, Franz-Josef, Dr.-Ing. et al
Postfach 22 13 17
D-80503 München (DE)**

EP 0 400 194 B1

## Beschreibung

Die Erfindung betrifft ein Verfahren und eine Anordnung zur Bearbeitung von Sprungbefehlen in nach dem Fließbandprinzip arbeitenden Datenverarbeitungsanlagen gemäß dem Oberbegriff des Patentanspruches 1.

In der europäischen Patentanmeldung EP-A1-0 239 023 ist bereits ausführlich dargelegt, wie man bedingte Sprungbefehle bei feststehender, nicht mehr durch Vorgängerbefehle in der Befehlsausführungsstufe veränderbarer Anzeige wie unbedingte Sprungbefehle behandeln und dadurch bei nicht erfüllten bedingten Sprüngen jeweils einen Wartezyklus in der Befehlsausführungsstufe einsparen kann.

Bei dieser bekannten Lösung werden aber nur Befehle erfaßt, die keine Änderung der bestehenden Anzeige mehr bewirken, was ohne Schwierigkeiten bereits in der Befehlsinterpretationsstufe durch Überprüfung des jeweiligen Operationscodes erkannt werden kann. Durch Speicherung von entsprechenden Hinweiskennzeichen parallel zu der fortschreitenden Verarbeitung der zugehörigen Befehle in den nachfolgenden Verarbeitungsstufen bis zur endgültigen Befehlsausführung kann dann in einfacher Weise bereits am Ende eines zu interpretierenden bedingten Sprungbefehles festgestellt werden, ob die bestehende Anzeige noch geändert wird oder nicht. Bei nicht mehr veränderbarer Anzeige kann dann durch unmittelbaren Vergleich von Maske und Anzeige entschieden werden, ob der Sprung erfüllt ist oder nicht, so daß bei nicht erfülltem Sprung unmittelbar und ohne Verzug die Aufbereitung des linearen nachfolgenden nächsten Befehles durchgeführt werden kann, ohne daß ein durch das normalerweise übliche Vorauslesen des alternativen Befehles bedingter Wartezyklus entsteht.

Aus IBM Technical Disclosure Bulletin, Band 25, Nr. 1, Juni 1982, Seiten 130 bis 133, ist weiterhin eine Lösung bekannt, derzufolge Wartezyklen bei bedingten Sprungbefehlen abhängig von einigen vorgegebenen unmittelbaren Vorläuferbefehlen vermieden werden können. Es handelt sich hierbei um einige RR- und auch XR-Befehle, bei denen die Anzeige zu Null wird, wenn das Ergebnis der Befehlsausführung Null ergibt, was durch einfachen Bit-für-Bit-Vergleich der Operanden in der auf die Befehlsinterpretationsstufe folgenden Adressenrechnungsstufe überprüft werden kann. Dieses Verfahren ist aber nur auf Befehle beschränkt, die dem bedingten Sprungbefehl unmittelbar vorausgehen.

Zweck der Erfindung ist es, eine weitere Möglichkeit zur Vermeidung von Wartezyklen durch Behandlung von nicht erfüllten bedingten Sprungbefehlen wie unbedingte Sprungbefehle zu schaffen. Dies wird bezüglich des neuen Verfahrens durch die kennzeichnenden Merkmale des Patentanspruches 1 erreicht.

Ausgangspunkt der neuen Lösung ist dabei, daß die bis zum Ende der Interpretationsphase eines Befehls benötigte Anzeige nicht nur von der Befehlsausführungsebene erzeugt wird, sondern unabhängig davon in einer früheren Befehlsverarbeitungsebene, nämlich bereits in der auf die Interpretationsphase folgenden Adressenrechnungsphase. Das ist aber nur möglich, wenn für die Bereitstellung der dazu benötigten Operanden keine Adressenrechnung erforderlich ist und die Anzeigenbildung innerhalb eines Arbeitszyklus durchführbar ist. Tatsächlich gibt es eine Reihe derartiger Befehle in Form der RR-Befehle, deren Operanden ohne vorherige Adressenrechnung in den Mehrzweckregistern unmittelbar verfügbar sind und zu denen die Anzeige in einem Arbeitszyklus ermittelt werden kann, wenn diese Befehle keine Gleitpunktfunktionen betreffen.

Diese vorgegebenen Befehle lassen sich ebenfalls in einfacher Weise anhand ihres Operationscodes in der Interpretierungsphase ermitteln, so daß davon abhängig unmittelbar die Anzeigenbildung veranlaßt werden kann. Handelt es sich bei einem solchen vorgegebenen Befehl um einen unmittelbaren Vorgängerbefehl zu einem bedingten Sprungbefehl, dann kann die parallel zur Interpretationsphase des Sprungbefehles ermittelte Anzeige am Ende der Interpretationsphase noch rechtzeitig mit der Befehlsmaske verglichen und geprüft werden, ob die Sprungbedingung erfüllt ist oder nicht.

Bei einer Weiterbildung der Erfindung gemäß Patentanspruch 2 kann auf die zu einem vorgegebenen Befehl gesondert gebildete Anzeige auch zurückgegriffen werden, wenn dieser kein unmittelbarer Vorläuferbefehl zum bedingten Sprungbefehl ist, indem zusätzlich in an sich bekannter Weise überwacht wird, ob dazwischenliegende Befehle die bestehende Anzeige noch verändern können. Jedoch endet die Steuerung anhand der gesonderten Anzeige spätestens mit der Ausführung des zugehörigen Befehles, so daß die maximale Anzahl der zu überwachenden, zwischen einem vorgegebenen Befehl und einem nachfolgenden, bedingten Sprungbefehl liegenden und die Anzeige möglicherweise ändernden Befehle auf die Anzahl der auf die Interpretationsstufe folgenden weiteren Verarbeitungsstufen bis zur Befehlsausführung begrenzt ist. Bei Überschreiten dieser Grenze geht daher das neue Verfahren in das bereits bekannte Verfahren über, indem gemäß Patentanspruch 3 auf die in der Befehlsausführungsstufe gebildete Anzeige zurückgegriffen wird.

Andere Weiterbildungen der Verfahren gemäß der Patentansprüche 1 bis 3 ergeben sich aus den Ansprüchen 4 bis 11. Diese beziehen sich auf die Anzahl der für eine Aussage benötigten und abzuspeichernden Anzeigenänderungshinweise, auf die unterschiedliche Art der Speicherung der Anzeigenänderungshinweise lediglich in einem oder nacheinander in allen der benötigten Speicherelemente, auf die von der Belegungsdauer eines Speicherelementes unabhängig steuerbare Gültigkeitsperiode der einzelnen Anzeigenänderungshinweise und die damit verbundene Steuerung, sowie auf die Ableitung der für die Speicherung und deren zeitgerechte Bereitstellung benötigten Steuersignale und deren Beeinflussung durch die bei Ausführung eines bedingten Sprungbefehles abgeleiteten Steuersignale.

Eine Anordnung zur Durchführung des erfindungsgemäßen Verfahrens ergibt sich aus Anspruch 12. Diese besteht danach im wesentlichen aus drei Einrichtungen, nämlich einer Einrichtung zur Bildung der gesonderten Anzeige, einer mit dieser zusammenarbeitenden Anzeigeüberwachungseinrichtung und der an sich vorhandenen Sprungbefehlauswerteeinrichtung, die in Auswirkung der Erfindung erweitert ist, so daß abhängig von dem von der Anzeigenüberwachungseinrichtung gelieferten Steuersignal ein bedingter Sprungbefehl als unbedingter Sprungbefehl gewertet und auf die von einem solchen ausgelösten Steuersignale umgeschaltet werden kann. Weiterbildungen hierzu ergeben sich aus den weiteren Ansprüchen 13 bis 19.

Einzelheiten der Erfindung seien nachfolgend anhand von in der Zeichnung dargestellten Ausführungsbeispielen näher erläutert. Im einzelnen zeigen

FIG 1 Ablaufdiagramme für die Befehlsbearbeitung in den einzelnen Fließbandstufen zur Erläuterung der Verlustzeiten bei nicht erfüllten bedingten Sprungbefehlen im Vergleich zu nicht erfüllten unbedingten Sprungbefehlen.

FIG 2 ein schematisches Blockschaltbild für die Verarbeitung von Sprungbefehlen gemäß der Erfindung,

FIG 3 ein Blockschaltbild für den Anzeigengenerator von FIG 2,

FIG 4 den Aufbau von zwei üblicherweise verwendeten bedingten Sprungbefehlen,

FIG 5 ein Blockschaltbild der Sprungbefehlauswerteeinrichtung von FIG 2,

FIG 6A bis 6C ein Blockschaltbild der Anzeigeüberwachungseinrichtung von FIG 2,

FIG 7 ein Ablauf- und Impulsdiagramm für die Anzeigenüberwachungseinrichtung von FIG 6 bei Auftreten eines nicht erfüllten bedingten Sprungbefehles,

FIG 8 ein Ablauf- und Impulsdiagramm für die Anzeigenüberwachungseinrichtung von FIG 6 bei Auftreten eines erfüllten bedingten Sprungbefehles,

FIG 9 ein Blockschaltbild einer weiteren Ausführungsform der Anzeigenüberwachungseinrichtung von FIG 2,

FIG 10 ein Ablauf- und Impulsdiagramm für die Anzeigenüberwachungseinrichtung von FIG 9 bei Auftreten eines nicht erfüllten bedingten Sprungbefehles und

FIG 11 ein Ablauf- und Impulsdiagramm für die Anzeigenüberwachungseinrichtung von FIG 9 bei Auftreten eines erfüllten bedingten Sprungbefehles.

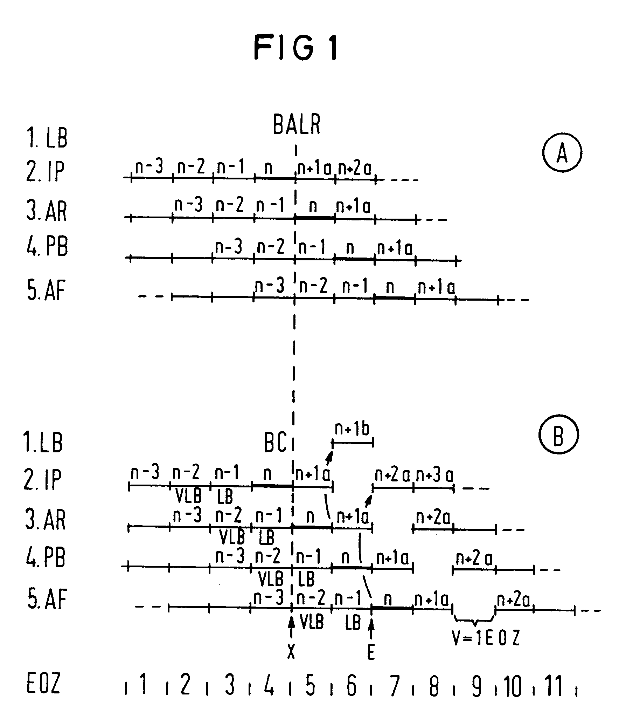

Die Ablaufdiagramme A und B von FIG 1 zeigen jeweils die Ablauffolgen der Befehle n-3 bis n+2a bzw. n+2b während der Arbeitszyklen EOZ1 bis 11 des Fließbandes in den einzelnen Verarbeitungsstufen 1 bis 5, die sich auf das Lesen der Befehle (LB), auf die Befehlsinterpretation (IP), auf die Adressenrechnung (AR), auf die Parameterbereitstellung (PB) und auf die Befehlsausführung (AF) beziehen. In beiden Ablaufdiagrammen A und B ist der Befehl n ein nicht erfüllter Sprungbefehl, was zusätzlich durch die größere Strichstärke hervorgehoben ist. Es handelt sich dabei um einen unbedingten Sprungbefehl BALR beim Ablaufdiagramm A, sowie um einen bedingten Sprungbefehl BC beim Ablaufdiagramm B.

Beim unbedingten Sprungbefehl BALR steht spätestens am Ende der Interpretationsphase am Ende des Zyklus EOZ4 fest, ob der Sprung erfüllt ist oder nicht. Bei nicht erfülltem unbedingten Sprungbefehl wird gemäß dem Ablaufdiagramm A die Befehlsfolge linear mit dem nächsten Befehl n+1a fortgesetzt, als ob kein Sprungbefehl vorgelegen hat.

Beim bedingten Sprungbefehl n kann die Entscheidung, ob der Sprung erfüllt ist oder nicht, erst nach Ausführung des vorangehenden Befehls n-1 in Stufe 5 abhängig von der damit verbundenen Anzeige getroffen werden, also am Ende des Arbeitszyklus EOZ6, was durch einen mit E bezeichneten Pfeil angedeutet ist.

Nach Interpretation des Befehles n im Arbeitszyklus EOZ4 wird daher im Arbeitszyklus EOZ5 zunächst der linear folgende Befehl n+1a interpretiert und im nachfolgenden Zyklus EOZ6 nach der Adressenberechnung in Stufe 3 der Befehlsblock für die Verzweigungsrichtung von Stufe 1 auf Verdacht gelesen. Am Ende des Arbeitszyklus EOZ6, was mit dem Pfeil E angedeutet ist, entscheidet sich dann, welche Verzweigungsrichtung einzuschlagen und welcher Befehl als nächster zu interpretieren ist.

Beim nicht erfüllten bedingten Sprungbefehl gemäß dem Ablaufdiagramm B wird, da der erste Befehl n+1a der linearen Folge bereits interpretiert und an die nächste Stufe 3 weitergeleitet worden ist, der Folgebefehl n+2a in Stufe 2 während des Arbeitszyklus EOZ7 interpretiert, während der Vorgängerbefehl n+1a in der üblichen Weise weiterbehandelt wird. Durch das Aussetzen der Interpretation für den Befehl n+2a im Arbeitszyklus EOZ6 entsteht also ein Ausführungsverlust V von einem Arbeitszyklus EOZ.

Die Gegenüberstellung beider Ablaufdiagramme A und B zeigt, daß bei einem nicht erfüllten bedingten Sprungbefehl gegenüber einem nicht erfüllten unbedingtem Sprungbefehl ein Verlust von jeweils einem Arbeitszyklus EOZ gegeben ist.

Dieser Unterschied resultiert daraus, daß beim unbedingten Sprungbefehl BALR bereits am Ende der In-

EP 0 400 194 B1

terpretationsphase für den Sprungbefehl n im Arbeitszyklus EOZ4 entschieden werden kann, ob der Sprung erfüllt ist oder nicht, während beim bedingten Sprungbefehl BC diese Entscheidung erst am Ende des Arbeitszyklus EOZ6 getroffen werden kann, wenn die Anzeige aus der Verarbeitung des Vorgängerbefehles n-1 vorliegt.

Könnte daher bereits zum mit X gekennzeichneten Ende des Arbeitszyklus EOZ4 eine Aussage darüber getroffen werden, daß die sich in der Fließbandbearbeitung befindlichen, aber noch nicht ausgeführten Vorgängerbefehle n-2 als vorletzter Befehl VLB und n-1 als letzter Befehl LB die bestehende Anzeige bis zur Ausführung des Sprungbefehles n im Arbeitszyklus EOZ7 nicht mehr verändern, dann ließe sich bei nicht mehr veränderbarer Anzeige ein bedingter Sprungbefehl wie ein unbedingter Sprungbefehl behandeln. Dadurch ließe sich bei jedem bedingten Sprungbefehl, der wegen der bereits gültigen Anzeige als unbedingter Sprungbefehl behandelt werden kann und dessen Sprungbedingung nicht erfüllt ist, ein sonst notwendiger Wartezyklus in der Ausführungsstufe vermeiden.

Die bereits in der eingangs genannten EP-A1-0 239 023 beschriebene Lösung beruht auf dieser Erkenntnis, indem bereits in der Interpretationsstufe IP bei jedem Befehl überprüft wird, ob durch ihn noch eine Anzeige geändert werden kann, und die ermittelten Anzeigenänderungshinweise gespeichert und bei der Interpretation eines nachfolgenden bedingten Sprungbefehles berücksichtigt werden.

Der gleiche Vorteil ergibt sich gemäß der Erfindung auch bei die Anzeige möglicherweise noch verändernden Befehlen, wenn die Anzeige zu den einzelnen Befehlen unabhängig von der Ausführungsstufe AF zusätzlich in der Adressenrechnungsstufe AR gebildet und am Ende der Interpretationsphase eines nachfolgenden Befehls noch berücksichtigt wird. Maßgebend für die Prüfung ist also die gesondert ermittelte Anzeige des letzten Vorgängerbefehls LB oder die des vorletzten Vorgängerbefehls VLB, wenn diese vom letzten Befehl LB nicht mehr verändert wird.

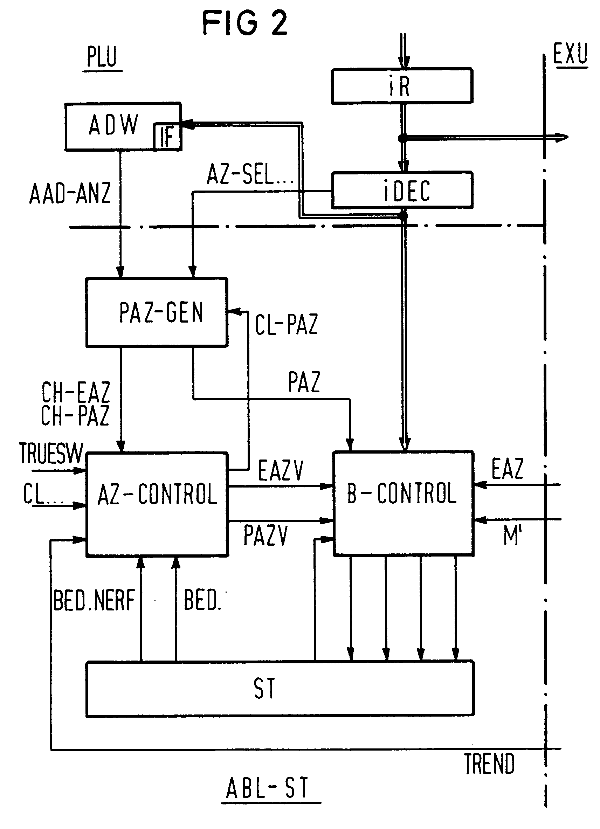

FIG 2 zeigt ein schematisches Blockschaltbild der entsprechend der Erfindung erweiterten und für die Verarbeitung von Sprungbefehlen notwendigen Anlagenteile einer nach dem Fließbandprinzip arbeitenden Datenverarbeitungsanlage mit einem die Fließbandstufen 1 bis 4 beinhaltenden Befehlsaufbereitungsprozessor PLU und einem die Ausführungsstufe 5 bildenden Befehlsausführungsprozessor EXU. Ein in der Stufe 1 in an sich bekannte Weise, beispielsweise in einem Pufferspeicher, bereitgestellter Befehl wird für die Interpretation in der Stufe 2 in ein Befehlesregister IR übernommen und von einer angeschlossenen Decodiereinrichtung IDEC in herkömmlicher Weise decodiert, um die Steuersignale für die nachfolgenden Verarbeitungsstufen zu erzeugen, die im einzelnen nicht dargestellt sind und in herkömmlicher Weise ausgebildet sein können.

Die Ablaufsteuerung ABL-ST ist dabei zentral für alle Befehlsverarbeitungsstufen vorgesehen. Sie koordiniert die Zusammenarbeit der einzelnen Verarbeitungsstufen und steuert die Übergabe der einzelnen Befehle von einer Stufe zur nächsten. Sie ist weiterhin zuständig für die Auflösung von Konfliktsituationen.

Teil der Ablaufsteuerung ABL-ST ist eine Sprungbefehlsüberwachungseinrichtung B-CONTROL, die in herkömmlicher Weise die von Sprungbefehlen festgelegten Sprungbedingungen prüft und entscheidet, mit welchem Befehl die Befehlsverarbeitung fortgesetzt werden soll. Weiterer Bestandteil der Ablaufsteuerung ist die bereits bei der bekannten Lösung vorgesehene Anzeigenüberwachungseinrichtung AZ-CONTROL, die abhängig von Anzeigenänderungshinweisen CH-EAZ und CH-PAZ für jeden in der Stufe 2 bzw. in der Stufe 3 bearbeiteten Befehl und abhängig von, einen bedingten Sprungbefehl betreffenden Steuersignalen BED und BED.NERF Steuersignale EAZV bzw. PAZV an die Sprungbefehlüberwachungseinrichtung B-CONTROL liefert. Diese Steuersignale EAZV bzw. PAZV zeigen an, ob entweder die vorliegende, vom Befehlsausführungsprozessor EXU gelieferte Anzeige EAZ oder die im voraus vom Befehlsaufbereitungsprozessor PLU gebildete Anzeige PAZ maßgebend ist und von nachfolgend auszuführenden Befehlen noch geändert werden kann oder nicht, also ungültig ist oder gültig.

Die Anzeigenänderungshinweise CH-EAZ und CH-PAZ sowie die im voraus gesondert ermittelte Anzeige PAZ wird von einem gemäß der Erfindung vorgesehenen Anzeigengenerator PAZ-GEN geliefert, der die vom Befehlsdecodierer IDEC gelieferten Steuersignale AZ-SEL... und die Ergebnisanzeigen AAD-ANZ des die jeweilige Befehlsausführung im Befehlsaufbereitungsprozessors PLU simulierenden Rechenwerkes ADW bei den von der Einrichtung IF ausgewählten vorgegebenen Befehlen auswertet. Dieses Rechenwerk ADW ist im vorliegenden Fall der bei den RR-Befehlen nicht benötigte Adressenrechner der Adressenrechnungsstufe, der die in den bezeichneten allgemeinen Registern vorhandenen Operanden entsprechend dem jeweils zugehörigen Operationscode verknüpft und dabei die entsprechenden Ergebnissignale AAD-ANZ bildet, wie sie beispielsweise im Anhang 4 der Siemens-Druckschrift D 15/5104-04 "Zentraleinheiten: Siemens-System 7.500 und 7.700 - Beschreibung und Befehlsliste", Seiten IV 1 und 7, in Zuordnung zur jeweiligen befehlsabhängigen Anzeige zusammengestellt sind.

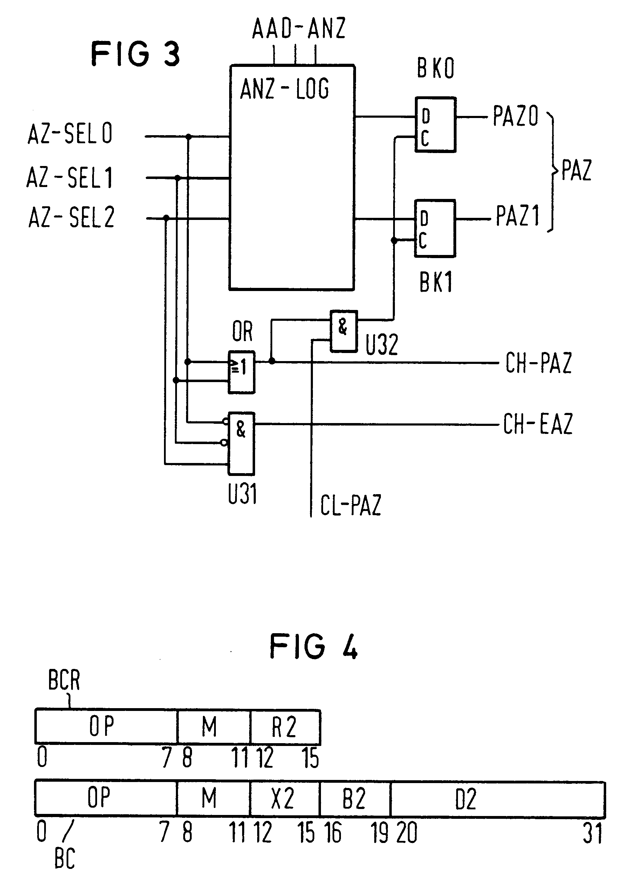

FIG 3 zeigt das Blockschaltbild des Anzeigengenerators PAZ-GEN, wobei die Steuersignale AZ-SEL0 bis AZ-SEL2 folgende Bedeutung haben:

4

| AZ-SEL | | | Bedeutung | | CH-PAZ | CH-EAZ |
|---|---|---|---|---|---|---|
| 0 | 0 | 0 | keine Änderung der Anzeige | | 0 | 0 |
| 0 | 0 | 1 | EAZ | | 0 | 1 |
| 0 | 1 | 0 | PAZ für RR-Befehle | LTR, LCR, AR, SR | 1 | 0 |
| 0 | 1 | 1 | " " " | NR,OR,XR | 1 | 0 |
| 1 | 0 | 0 | " " " | CLR | 1 | 0 |
| 1 | 0 | 1 | " " " | CR | 1 | 0 |
| 1 | 1 | 0 | " " " | ALR, SLR | 1 | 0 |
| 1 | 1 | 1 | ohne Bedeutung | | | |

Die Steuersignale AZ-SEL... legen damit einerseits fest, ob eine Anzeige noch geändert werden kann oder nicht und welche Anzeige betroffen ist, die vom Befehlsausführungsprozessor EXU ermittelte Anzeige EAZ oder die vom Befehlsaufbereitungsprozessor PLU ermittelte Anzeige PAZ, was einerseits durch das UND-Gatter U31 und andererseits durch das ODER-Gatter OR31 überwacht wird.

Zum anderen steuern die Steuersignale AZ-SEL... die Bildung der befehlsabhängigen Anzeige PAZ aus den Ergebnissignalen AAD-ANZ durch die logische Verknüpfungsschaltung ANZ-LOG in Form von zwei codierten Signalen PAZ0 und PAZ1, die von dem am Ende der Ausführung eines mit CH-PAZ=1 gekennzeichneten Befehls in der Adressenrechenstufe AR jeweils mit dem Takt CL-PAZ angesteuerten bistabilen Kippstufen BK0 und BK1 bis zur Änderung durch den nächsten Befehl zwischengespeichert werden. Der Zusammenhang zwischen den Ergebnissignalen und den jeweils zu erzeugenden Anzeigen ergibt sich aus dem Anhang 4 der bereits genannten Siemens-Druckschrift.

Die Einrichtungen B-CONTROL und AZ-CONTROL arbeiten im übrigen mit dem restlichen Teil der Ablaufsteuerung ABL-ST, der in der Steuerung ST zusammengefaßt ist, zusammen, was im einzelnen noch erläutert wird.

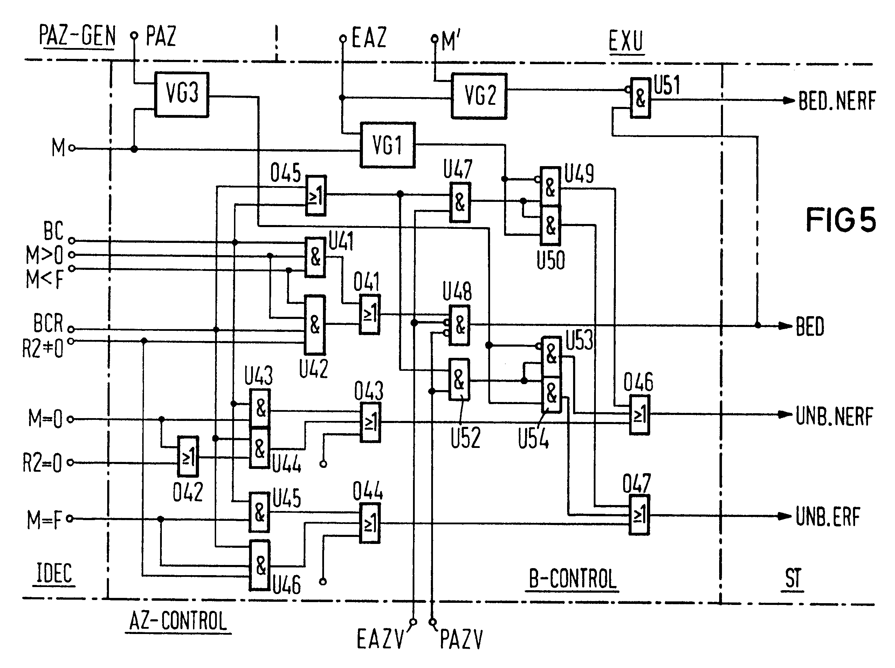

FIG 5 zeigt das Schaltbild der gemäß der Erfindung abgeänderten Sprungbefehlüberwachungseinrichtung B-CONTROL, wobei nur die die bedingten Sprungbefehle BC und BCR betreffenden Teile dargestellt sind. Die notwendigen Verknüpfungen der vom Befehlsdecodierer IDEC gelieferten Steuersignale ergibt sich aus dem Aufbau und der Funktion dieser Befehle, was zunächst erläutert werden soll.

FIG 4 zeigt zu diesem Zweck den Aufbau zweier bekannter bedingter Sprungbefehle BCR und BC entsprechend der Beschreibung auf Seite 10 - 40 der bereits genannten Siemens-Druckschrift.

Die Bits 0 bis 7 bilden jeweils den Operationscode OP und die Bits 8 bis 11 jeweils die Maske, während die übrigen Felder R2 bzw. X2/B2/D2 die jeweilige Sprungadresse angeben, unter der bei einem erfüllten Sprung der erste Befehl n+1b der neuen Verzweigungsrichtung entsprechend den Ablaufdiagrammen von FIG 1 zu finden ist.

Sind bei diesen Befehlen alle Bits der Maske M auf Null gesetzt, gilt demzufolge M=0, oder ist beim Befehl BCR die Adresse auf Null gesetzt und gilt demzufolge R2=0, dann erfolgt kein Sprung. Die Auswertung dieser Bedingungen erfolgt in FIG 5 durch das ODER-Glied 042 und die UND-Glieder U43 und U44, deren Ausgangssignale über nachgeschaltete ODER-Glieder 043 und 046 zum Steuersignal UNB.NERF führen. Dieses Signal zeigt der übrigen Steuerung ST an, daß der ausgewertete Sprungbefehl als nicht erfüllter unbedingter Sprung zu behandeln ist und demzufolge die Befehlsfolge mit dem linear folgenden Befehl n+1a gemäß dem Ablaufdiagramm A von FIG 1 fortgesetzt werden kann.

Sind bei beiden Befehlen alle Bits der Maske M auf Eins gesetzt und gilt demzufolge M=F, dann ist der Sprungbefehl als unbedingter Sprungbefehl zu werten, dessen Sprungbedingung beim Befehl BC als erfüllt anzusehen ist, während beim Befehl BCR dasselbe Ergebnis nur gegeben ist, wenn gleichzeitig R=0 gilt. Dies wird in FIG 5 mit den UND-Gliedern U45 und U46 ausgewertet, deren Ausgangssignale über die ODER-Glieder

5

044 und 047 zum Steuersignal UNB.ERF führen, was anzeigt, daß der Sprungbefehl als unbedingter Sprungbefehl mit erfüllter Sprungbedingung zu behandeln ist.

In allen übrigen Fällen, wenn also M=0 und M=F, sowie R2=0 beim Befehl BCR gilt, was mit den UND-Gliedern U41 und U42 sowie dem nachgeschalteten ODER-Glied 041 ausgewertet wird, ist der bedingte Sprungbefehl auch als solcher zu behandeln. Dies gilt aber nur, wenn die Anzeigen PAZ und EAZ bis zur Ausführung des Sprungbefehles noch geändert werden können und demzufolge die Steuersignale PAZV und EAZV logisch Null sind.

Sind dagegen die vorliegenden Anzeigen PAZ und EAZ bereits gültig und die Steuersignale PAZV und EAZV logisch Eins, dann wird das Ausgangssignal des ODER-Gliedes 041 durch das UND-Glied U48 gesperrt und das die Ausführung eines bedingten Sprunges anzeigende Steuersignal BED für die übrige Ablaufsteuerung ST unterdrückt.

Gleichzeitig mit der Sperrung des UND-Gliedes U48 werden die UND-Glieder U47 und U52 für das Ausgangssignal des ODER-Gliedes 045 freigegeben, das das Vorliegen eines bedingten Sprungbefehles BC oder BCR überwacht. Durch das Umschalten vom UND-Glied U48 auf die UND-Glieder U47 und U52 wird daher ein bedingter Sprungbefehl in einen unbedingten Sprungbefehl umgewandelt, wobei der Vergleich der vorliegenden gültigen Anzeige EAZ bzw. PAZ mit der Maske M des decodierten Sprungbefehles mittels des Vergleichers VG1 bzw. VG3 darüber entscheidet, ob die Sprungbedingung erfüllt ist oder nicht.

Bei erfüllter Sprungbedingung wird das UND-Glied U50 bzw. U54 durchlässig, dessen Ausgangssignal über das ODER-Glied 047 zum Steuersignal UNB.ERF wird. Bei nicht erfüllter Sprungbedingung wird dagegen das UND-Glied U49 bzw. U53 durchlässig, dessen Ausgangssignal über das ODER-Glied 046 das Steuersignal UNB.NERF erzeugt.

Bei einem als bedingter Sprungbefehl auszuführenden Befehl kann weiterhin nach Ausführung des Sprungbefehles anhand der vom Ausführungsprozessor EXU ermittelten endgültigen Anzeige EAZ für den Vorgängerbefehl und der zur Verfügung gestellten Maske M′, die der ursprünglichen Maske M entspricht, mit dem Vergleicher VG2 und dem nachgeschalteten UND-Glied U51 geprüft werden, ob die Sprungbedingung erfüllt ist oder nicht, was im letzteren Falle das am Ausgang des UND-Gliedes U51 abgegebene Steuersignal BED.NERF zu logisch Eins werden läßt.

Der in diesem Zusammenhang interessierende, geänderte Teil der Sprungbefehlüberwachungseinrichtung B-CONTROL unterscheidet sich damit von der üblicherweise verwendeten Sprungbefehlüberwachungseinrichtung im wesentlichen durch die Umschaltbarkeit abhängig von den Steuersignalen EAVZ und PAVZ und wenigstens durch die Vergleicher VG1 und VG3, während das Ausgangssignal des Vergleichers VG2 auch direkt vom Ausführungsprozessor EXU zur Verfügung gestellt werden kann. Die freien Anschlüsse an den ODER-Gliedern 043 und 044 sind für Auswertungssignale von anderen entsprechend zu behandelnden Sprungbefehlen, z.B. BALR und BAL, vorgesehen, die auf Seite 10-39 der bereits genannten Siemens Druckschrift beschrieben sind.

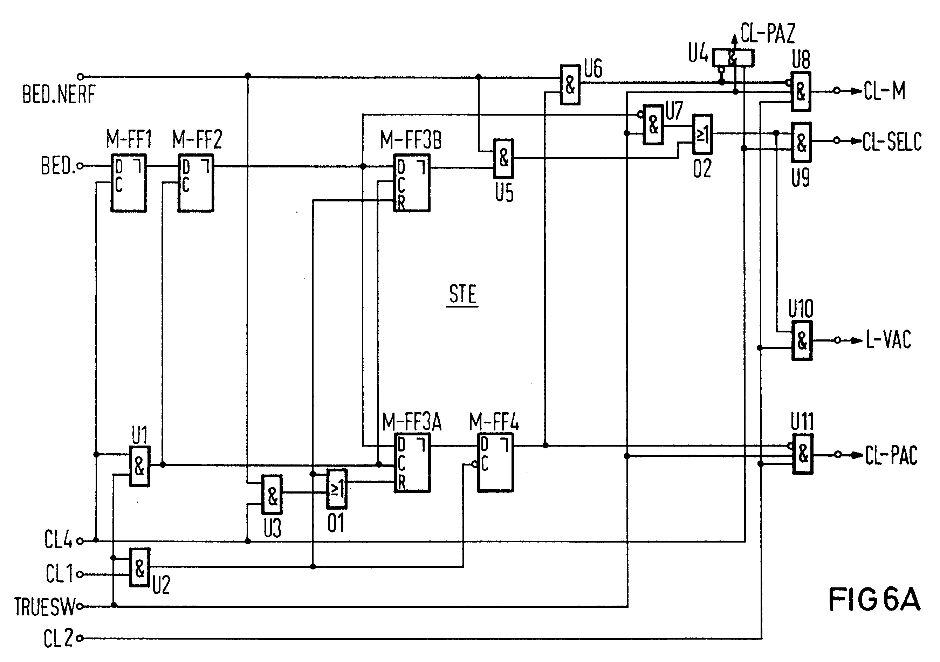

Die Schaltungsanordnungen von FIG 6A bis FIG 6C bilden zusammen die Anzeigeüberwachungseinrichtung AZ-CONTROL von FIG 2 zur Erzeugung der Steuersignale EAZV und PAZV für die Sprungbefehlüberwachungseinrichtung B-CONTROL von FIG 5.

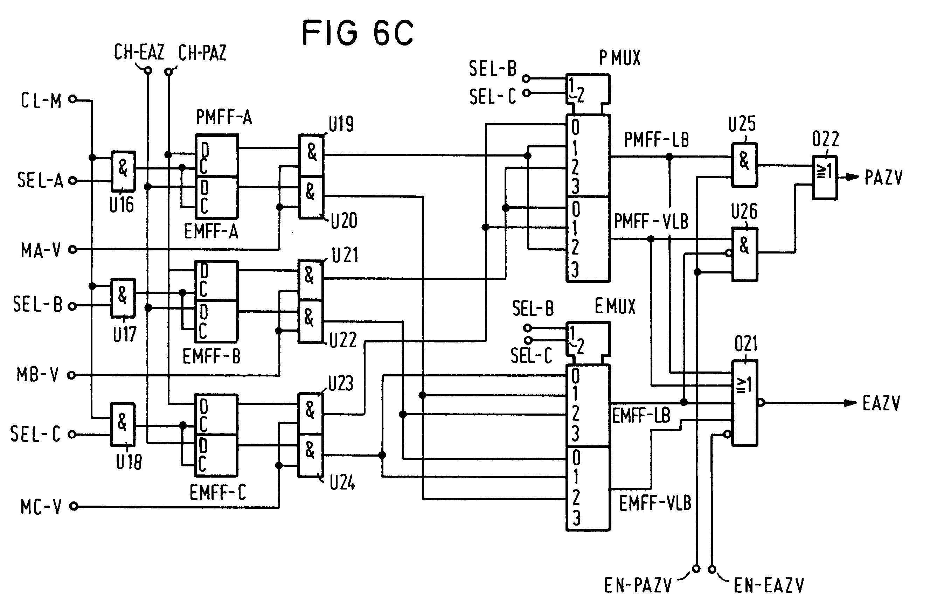

Die vom Befehlsdecodierer IDEC nacheinander gelieferten Anzeigenänderungshinweise CH-EAZ und CH-PAZ werden jeweils in einer der drei Kippstufen EMFF-A bis EMFF-C bzw. PMFF-A bis PMFF-C im Schaltungsteil von FIG 6C gespeichert, die zyklisch umlaufend angesteuert werden und deren Ausgänge über nachgeschaltete UND-Glieder U19 bis U24 für die weitere Auswertung durch die Multiplexer PMUX und EMUX sowie die von diesen beaufschlagten UND-Gattern U25 und U26 und ODER-Gattern 022 und 021 durch die zugehörigen Gultigkeitssignale MA-V bis MC-V freigegeben werden.

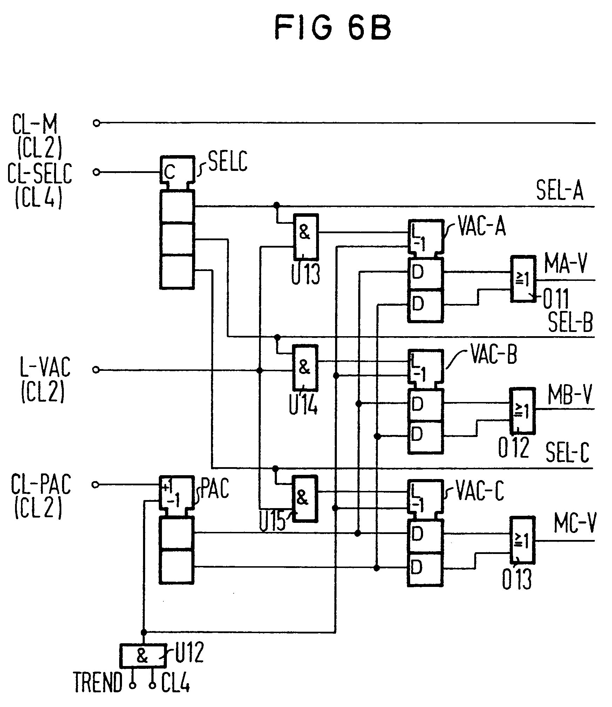

Bei dem dem Schaltungsteil von FIG 6C zugrundeliegenden Steuerungsprinzip werden die drei Speicherkippstufenpaare E/PMFF-A bis E/PMFF-C nicht den einzelnen, auf die Interpretationsstufe 2 folgenden Verarbeitungsstufen fest zugeordnet, sondern jeweils einem die Verarbeitungsstufen 3 bis 5 nacheinander durchlaufenden Befehl. Die Auswahl erfolgt durch einen zyklisch arbeitenden Auswahlzähler SELC in FIG 6B, der je Arbeitszyklus EOZ mit einem vom letzten Zyklustakt, z.B. CL4, abgeleiteten Zähltakt CL-SELC jeweils um einen Schritt weitergeschaltet wird. Dieser Auswahlzähler weist eine der Anzahl der Speicherkippstufen entsprechende Anzahl von Zählstufen auf, deren Ausgänge SEL-A bis SEL-C jeweils eines der UND-Glieder U16 bis U18 in FIG 6C für den Steuertakt CL-M freigeben, so daß dieser auf den Takteingang der angeschlossenen rückflankengesteuerten Speicherkippstufenpaare E/PMFF-A bis E/PMFF-C einwirken kann.

Dieser Auswahlzähler SELC steuert mit seinen Steuersignalen SEL-B und SEL-C auch die Einstellung der beiden Multiplexer EMUX und PMUX in FIG 6C, die die in den Speicherkippstufen EMFF-A bis EMFF-C und PMFF-A bis PMFF-C gespeicherten gültigen Anzeigenänderungshinweise CH-EAZ bzw. CH-PAZ bezogen auf den jeweils letzten Vorgängerbefehl LB oder den jeweils vorletzten Vorgängerbefehl VLB und unterschieden nach der gültigen Anzeige aus dem Aufbereitungsprozessor PLU oder aus dem Ausführungsprozessor EXU auswählen.

Die Einstellung und Eingangsbeschaltung mit den Ausgängen der Speicherkippstufen ergibt sich dabei nach folgendem Schema:

| | | E/PMUX Eingang | Ausgang von E/PMFF-x | |
|---|---|---|---|---|
| SEL-B | SEL-C | | für LB | für VLB |
| 0 | 0 | 0 | C | B |
| 1 | 0 | 1 | A | C |
| 0 | 1 | 2 | B | A |
| | | 3 | nicht beschaltet | |

Wird ein in der Verarbeitungsstufe 3 bearbeiteter Befehl n entsprechend FIG 1 der Zählstellung A des Auswahlzählers SELC zugewiesen, dann ist gemäß Zeile 1 in rückwärts gerichteter Folge der Befehl n-1 als LB der Zählstufe C und der Befehl n-2 als VLB der Zählstufe B und so weiter zugeordnet. Die so vom Multiplexer PMUX parallel ausgewählten beiden Änderungshinweise PMFF-LB und PMFF-VLB steuern dann über die beiden UND-Gatter U25 und U26 entsprechend den beiden einzuhaltenden Bedingungen die Erzeugung des Gültigkeitssignales PAZV für die bereits im voraus in der Verarbeitungsstufe 3 gebildete Anzeige PAZ, wobei das UND-Gatter U25 die Ableitung der Anzeige vom vorausgehenden letzten Befehl LB und das UND-Gatter U26 die Ableitung der Anzeige vom vorausgehenden vorletzten Befehl VLB in Verbindung mit einer nicht mehr erfolgenden Änderung durch den nachfolgenden letzten Befehl LB bei der Ausführung durch den Befehlsausführungsprozessor EXU überwacht und ein Freigabesignal EN-PAZV die UND-Gatter U25 und U26 zeitgerecht freigibt.

Die vom Multiplexer EMUX ausgewählten Signale EMFF-LB und EMFF-VLB führen dagegen bei Vorliegen einer gesetzten Kippstufe EMFF-A bis EMFF-C wegen des invertierten Ausgangssignales des ODER-Gatters 021 unmittelbar zum die Ungültigkeit der vom Befehlsausführungsprozessor EXU gelieferten Anzeige EAZ anzeigenden Signal EAZV = 0, da die Anzeige bis zur Ausführung des erkannten Sprungbefehles gegebenenfalls noch geändert werden kann. Analoges gilt, wenn die andere Anzeige PAZ gültig ist.

Durch das Freigabesignal EN-EAZV am invertierten weiteren Eingang des ODER-Gliedes 021 kann die Erzeugung des die Behandlung bedingter Sprungbefehle als unbedingte Sprungbefehle beeinflussenden Signals EAVZ unterdrückt werden, ohne daß durch einen Fehler ein solches Signal vorgetäuscht werden kann.

Zur weiteren Steuerung ist für jedes Speicherkippstufenpaar E/PMFF... ein gesonderter, das jeweils zugehörige Gültigkeitssignal M...-V liefernder Gültigkeitszähler VAC... vorgesehen, der jeweils mit der Aufnahme der Bearbeitung eines Befehles n in der der Interpretationsstufe 2 folgenden Verarbeitungsstufe 3 mit einem von einem vierten Zähler PAC als Vorlaufzähler gelieferten codierten Zählerstand geladen wird, der die Anzahl der in der Ausführungsstufe 5 damit insgesamt noch auszuführenden Befehle, z.B. n-2, n-1 und n, anzeigt.

Die Zählerstände aller Gültigkeitszähler VAC-A bis VAC-C werden dann bei jeder Ausführung eines Befehles mit dem dies anzeigenden Steuersignal TREND des Ausführungsprozessors EXU um einen Zählschritt erniedrigt, so daß beim Zählerstand 0 der jeweils im zugehörigen Speicherkippstufenpaar, z.B. P/EMFF-C, abgespeicherte Anzeigenänderungshinweis CH-PAZ bzw. CH-EAZ ungültig wird, weil der zugehörige Befehl, z.B. n, ausgeführt ist.

Bei jeweils nur einen Zyklus für die Ausführung benötigenden Befehlen, wie dies im Beispiel unterstellt ist, wird also der Zählerstand des Vorlaufzählers PAC zu Beginn eines jeden Arbeitszyklus EOZ bei Bearbeitung eines jeden neuen Befehls in der Stufe 3 mit einem aus dem Zyklustakt CL2 abgeleiteten Steuertakt CL-PAC um einen Schritt erhöht und am Ende eines jeden Arbeitszyklus EOZ mit Beendigung der Ausführung eines jeden Befehls mit einem vom Zyklustakt CL4 abgeleiteten Steuertakt um einen Schritt erniedrigt. Bei einem vollgelaufenen Fließband mit drei auf die Interpretationsstufe 2 folgenden weiteren Verarbeitungsstufen 3 bis 5 wird der Vorlaufzähler PAC jeweils zu Beginn eines Arbeitszyklus auf den Zählerstand 3 gebracht und am Ende desselben Zyklus auf den Zählerstand 2 erniedrigt, so daß die Gültigkeitszähler VAC... immer mit dem Zählerstand 3 geladen werden. Benötigt ein Befehl dagegen mehrere Arbeitszyklen für seine Ausführung,

EP 0 400 194 B1

dann verzögert sich die Rückführung des Zählerstandes jeweils bis zum letzten Ausführungszyklus.

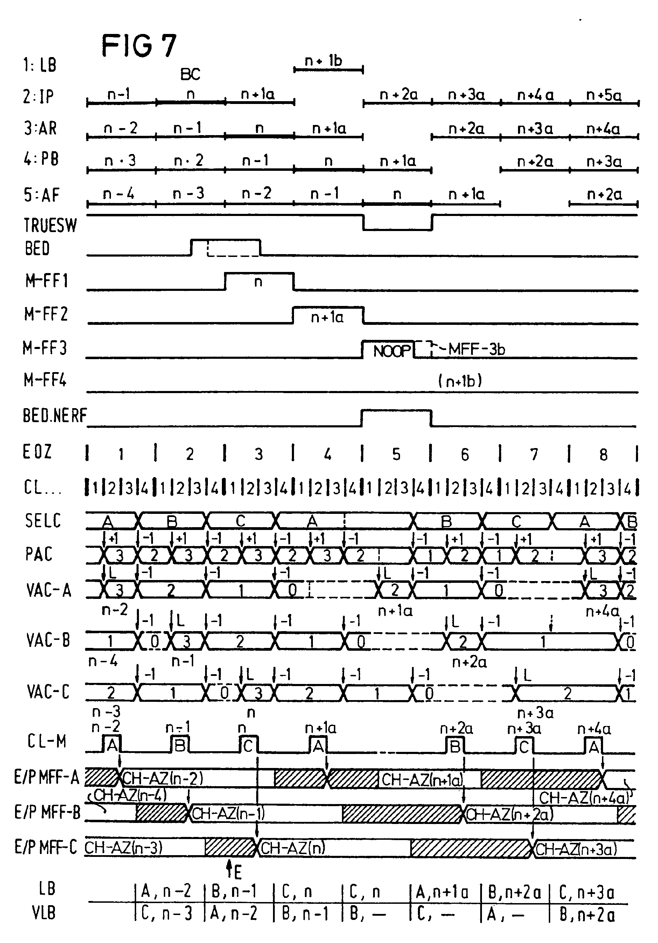

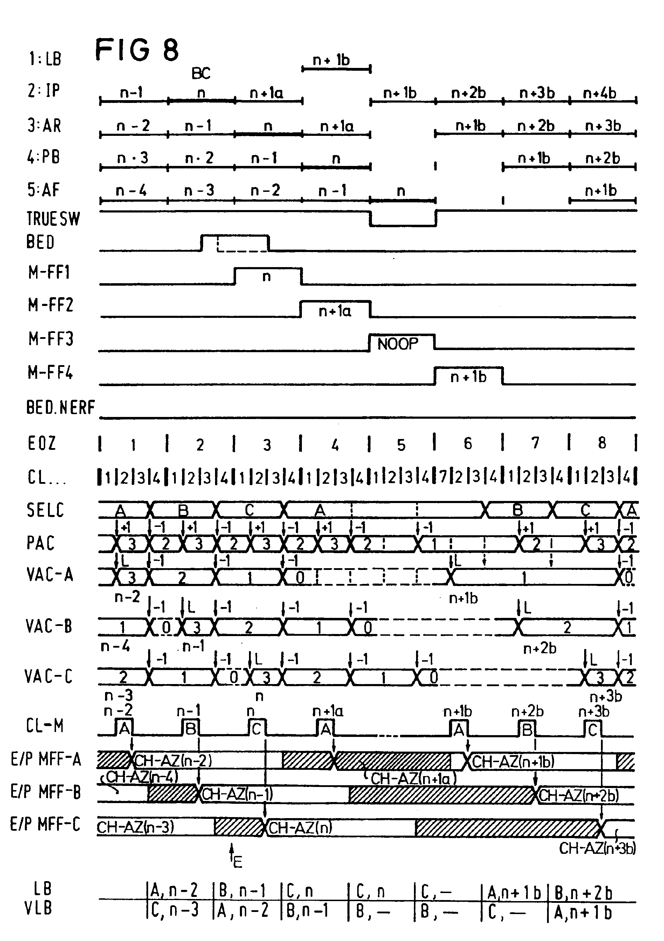

Die Ablauf- und Impulsdiagramme von FIG 7 und FIG 8 veranschaulichen die Zusammenhänge bei der Ausführung von bedingten Sprungbefehlen.

Ausgehend von den einzelnen Arbeitszyklen EOZ mit den einzelnen Taktimpulsen CL1 bis CL4 wird normalerweise mit jedem Taktimpuls CL4 der Auswahlzähler SELC um einen Schritt zyklisch fortgeschaltet, so daß er jeweils für die Dauer eines Arbeitszyklus, aber gegenüber diesem um eine Taktbreite vorlaufend, nacheinander die Zählerstände A, B und C in zyklischer Folge fortfahrend liefert.

Ebenso wird der Vorlaufzähler PAC zu Beginn eines Taktimpulses CL2 jeweils um einen Schritt erhöht, wann gleichzeitig ein Befehl in der Verarbeitungsstufe 3 bearbeitet wird, also das Signal TRUESW gleich logisch Eins ist. Bei einem anlaufenden Fließband beginnt dieser Zähler also beim Zählerstand 0, und sobald er den maximalen Zählerstand, nämlich 3 im vorliegenden Falle, erreicht hat, wird er mit jedem in Stufe 5 ausgeführten Befehl, was durch das Signal TREND in FIG 6B angezeigt wird, durch den Taktimpuls CL4 vorübergehend auf den Zählerstand 2 erniedrigt. Im Normalfall pendelt also der Zählerstand zwischen 3 und 2 hin und her.

Der Ladetakt CL-VAC für die Gültigkeitszähler VAC-A bis VAC-C zur Übernahme des Zählerstandes aus dem Vorlaufzähler PAC entspricht den Taktimpulsen CL2, der für den jeweils vom Auswahlzähler SELC ausgewählten Gültigkeitszähler wirksam wird. Bei den Impulsdiagrammen von FIG 7 und FIG 8 wird z.B. im Arbeitszyklus EOZ1 mit Zählerstand A des Auswahlzählers SELC der Gültigkeitszähler VAC-A angesteuert und der Zählerstand 3 aus dem Vorlaufzähler PAC übernommen usw. Der Zählerstand des Gültigkeitszählers VAC-A wird dann wie der des Vorlaufzählers PAC mit dem Taktimpuls CL4 erniedrigt, bis er den Zählerstand 0 erreicht, der die zugehörigen Anzeigenänderungshinweise ungültig werden läßt, da über das nachgeschaltete ODER Glied 011 die UND-Glieder U19 und U20 gesperrt werden.

Abhängig vom Zählerstand des Auswahlzählers SELC wird jeweils eines der Speicherkippstufenpaare E/PMFF-A bis E/PMFF-C mit den Taktimpulsen CL-M angesteuert, die von den Taktimpulsen CL2 abgeleitet sind, und es wird der ggfs. anliegende Anzeigenänderungshinweis CH-EAZ bzw. CH-PAZ abgespeichert.

Unterstellt man im vorliegenden Falle, daß das in der zweiten Verarbeitungsstufe abgeleitete Signal CH-AZ, das stellvertretend steht für eines der Änderungshinweissignale CH-EAZ oder CH-PAZ, jeweils von der Mitte eines Arbeitszyklus bis zur Mitte des nächsten Arbeitszyklus gültig ist, so steht mit Bezug auf die Impulsdiagramme von FIG 7 und FIG 8 das Signal CH-AZ für den Befehl n-2 bis zur Mitte des Arbeitszyklus EOZ1 zur Verfügung und wird abhängig von der gültigen Einstellung des Auswahlzählers SELC dem Gültigkeitszähler VAC-A und der zugehörigen Speicherkippstufe des Kippstufenpaares E/PMFF-A zugeordnet. In analoger Weise wird das vom Folgebefehl n-1 ab Mitte des Arbeitszyklus EOZ1 zur Verfügung stehende Signal CH-AZ in der ersten Hälfte des nachfolgenden Arbeitszyklus EOZ2 auf Grund der geänderten Einstellung des Auswahlzählers SELC dem Gültigkeitszähler VAC-B und der zugehörigen Speicherkippstufe des Kippstufenpaares E/PMFF-B zugeordnet usw..

Die in den Speicherkippstufenpaaren E/PMFF... abgespeicherten Signale CH-AZ für die einzelnen Befehle sind jeweils nur gültig, wenn der zugehörige Gültigkeitszähler VAC... einen von 0 abweichenden Zählerstand aufweist. In den zugehörigen Impulszeilen für die drei Speicherkippstufenpaare E/PMFF... in den Ablaufdiagrammen von FIG 7 und FIG 8 kennzeichnen die nicht schraffierten Bereiche die jeweilige Gültigkeitsperiode. Der Anzeigenänderungshinweis für den Befehl n-2 in der Speicherkippstufe MFF-A ist also beispielsweise mit Beginn des Taktimpulses CL3 im Arbeitszyklus EOZ1 bis zum Beginn des Taktimpulses CL4 im Arbeitszyklus EOZ3 gültig. Die Gültigkeitsperiode dauert also immer solange, bis der zugehörige Befehl in der Stufe 5 so gut wie beendet ist und die von diesem herrührende Anzeige gesetzt werden kann. Der zugehörige Zählerstand des Gültigkeitszählers VAC-A kennzeichnet daher abhängig von seinem Wert nacheinander die Bearbeitung des zugehörigen Befehls n-2 in der Stufe 3, der Stufe 4 und schließlich der Stufe 5.

Während der Interpretation eines Sprungbefehles n im Arbeitszyklus EOZ2 sind mit Beginn des Taktimpulses CL3 zunächst die in allen drei Kippstufenpaaren E/P MFF-A bis E/PMFF-C gespeicherten Anzeigenänderungshinweise für die Befehle n-3, n-2 und n-1 gültig. Dabei sei angenommen, daß nur der Befehl n-3 die Anzeige EAZ des Befehlsausführungsprozessors EXU noch verändern kann. Es gilt daher zunächst EAVZ=0 und PAZV=0, so daß bei einem bestimmten Sprungbefehl in FIG 5 über das UND-Glied U48 das Signal BED erzeugt wird. Mit dem Taktimpuls CL4 wird dann der Zählerstand des zugehörigen Gültigkeitszählers VAC-C zu 0 und damit die Aussage des Speicherkippstufenpaares E/PMFF-C ungültig, so daß das Steuersignal EAZV nun zu logisch Eins wird. Das UND-Glied U48 schaltet daher das Signal BED ab. Da mit dem Taktimpuls CL4 gleichzeitig auch die vom Befehl n-3 herrührende gültige Anzeige EAZ gesetzt wird, kann zum Ende des Arbeitszyklus EOZ2, was durch den mit E bezeichneten Pfeil angedeutet ist, eindeutig entschieden werden, ob abhängig vom Vergleicher VG1 das UND-Glied U49 oder das UND-Glied U50 wirksam zu schalten und demzufolge über das ODER-Glied 046 das Signal UNB.NERF oder über das ODER-Glied 047 das Signal UNB.ERF auszulösen ist.

Analoges gilt, wenn PAZV=1 gilt und statt des UND-Gliedes U47 das UND-Glied U52 aufgesteuert wird und anhand der Anzeige PAZ entschieden wird, ob abhängig vom Vergleicher VG3 das UND-Glied U53 oder das UND-Glied U54 wirksam zu schalten ist, so daß über das ODER-Glied 046 wiederum das Signal UNB.ERF oder über das ODER-Glied 047 das Signal UNB.ERF ausgelöst wird.

Im vorliegenden Falle sei jedoch für die Diagramme von FIG 7 und FIG 8 unterstellt, daß der Befehl n als bedingter Sprungbefehl auszuführen ist, was durch den Impulszug BED angedeutet ist. Dieses Signal wird daher nicht mit Beginn des Taktimpulses CL4 im Arbeitszyklus EOZ2 durch das Signal EAZV=1 oder PAZV=1 abgeschaltet.

Damit nun der bisher beschriebene Steuerungsmechanismus der Schaltungsteile von FIG 6B und FIG 6C auch einwandfrei arbeitet, wenn ein bedingter Sprungbefehl auszuführen ist, ist diesen Schaltungsteilen der Schaltungsteil von FIG 6A vorgeschaltet, der die benötigten Steuerimpulse für die übrigen Schaltungsteile liefert und verhindert, daß ein zunächst auf Verdacht interpretierter, aber nicht auszuführender linearer Folgebefehl n+1a das Ergebnis der Überwachung verfälschen kann.

Der Schaltungsteil von FIG 6A besteht aus fünf rückflankengesteuerten Kippstufen M-FF1, M-FF2, M-FF3A, M-FF3B und M-FF4, von denen die Kippstufen M-FF1 und M-FF2 einerseits mit den Kippstufen M-FF3A und M-FF4 und andererseits mit der Kippstufe M-FF3B eine Reihenschaltung bilden. Die Kippstufe M-FF1 überwacht als Eingangskippstufe, ob vom Steuerungsteil ST (FIG 5) ein bedingter Sprung mit dem Eingangssignal BED gemeldet wird, so daß mit der Rückflanke des letzten Taktimpulses CL4 des jeweils laufenden Arbeitszyklus die Kippstufe M-FF1 als Merker gesetzt wird - in FIG 7 und FIG 8 jeweils zu Beginn des Arbeitszyklus EOZ3. Dieser Merkzustand wird dann mit jedem weiteren in der Stufe 3 ausgeführten Befehl - das Signal TRUESW=1 steht an - mit den Taktimpulsen CL4 über das UND-Glied U1 zunächst an die Kippstufe M-FF2 und dann an die Kippstufen M-FF3A und M-FF3B weitergeleitet, so daß bei einem erfüllten bedingten Sprung - Signal BED.NERF=0 - schließlich die Kippstufe M-FF4 mit der Vorderflanke des Taktimpulses CL1 über das UND-Glied U2 gesetzt werden kann - in FIG 8 zu Beginn des Arbeitszyklus EOZ6. Der Merkzustand wandert somit mit Beginn eines jeden Arbeitszyklus von einer der vier Kippstufen M-FF... zur nächsten weiter (FIG 8).

Bei einem bedingten Sprung besteht die erste Auswirkung gemäß FIG 7 und FIG 8 darin, daß bei gesetzter Kippstufe M-FF2 im Arbeitszyklus EOZ4 das UND-Glied U7 und damit über das ODER-Glied 02 das UND-Glied U10 gesperrt wird, so daß mit dem Taktimpuls CL2 kein Ladeimpuls L-VAC für den vom Auswahlzähler SELC ausgewählten Gültigkeitszähler VAC-A abgegeben wird und dieser das mit dem Taktimpuls CL-M im Arbeitszyklus EOZ4 in die Speicherkippstufe MFF-A übernommene Signal CH-AZ für den auf Verdacht interpretierten Befehl n+1a nicht für gültig erklärt.

Auch wird am Ende des Arbeitszyklus EOZ4 mit Takt CL4 der Zählerstand des Auswahlzählers SELC nicht verändert, weil die gesetzte Kippstufe M-FF2 über das UND-Glied U7 auch das UND-Glied U9 in Fig. 5A sperrt, so daß kein Taktimpuls CL-SELC ausgelöst werden kann. Als weiteres entfällt im nachfolgenden Arbeitszyklus EOZ5 der Taktimpuls CL-PAC zum Hochzählen des Gültigkeitszählers PAC, so daß der Zählerstand 2 erhalten bleibt, weil während des Arbeitszyklus EOZ5 das Signal TRUESW entfällt und das UND-Glied U11 gesperrt bleibt.

Handelt es sich gemäß dem Signal BED.NERF=1 um einen nicht erfüllten bedingten Sprung (FIG 7), was mit Ende der Befehlsausführung des Befehls n-1 entschieden ist, wird infolge der gleichfalls gesetzten Kippstufe M-FF3B das UND-Glied U5 durchgesteuert, so daß über das ODER-Glied 02 das UND-Glied U10 mit dem Taktimpuls CL2 wieder für einen Taktimpuls L-VAC freigegeben wird. Der zu diesem Zeitpunkt ausgewählte Gültigkeitszähler VAC-A wird geladen und der den Befehl n+1a betreffende Speicherinhalt der Speicherkippstufe MFF-A dadurch nachträglich gültig.

Beim erfüllten bedingten Sprung gemäß FIG 8 bleibt die Ungültigkeit für die Speicherkippstufe MFF-A dagegen weiter bestehen.

In jedem Falle entfällt bei einem bedingten Sprungbefehl entsprechend dem Signal BED=1 im Arbeitszyklus EOZ5 wegen der Arbeitspause in Stufe 3 und dem damit verbundenen Signal TRUESW=0 der mit dem Taktimpuls CL2 sonst ausgelöste Taktimpuls CL-M.

Ab dem Taktimpuls CL4 im Arbeitszyklus EO5 ist der weitere Arbeitsablauf bei einem nicht erfüllten bedingten Sprung gemäß FIG 7 wieder ungestört, da über das UND Glied U3 und das ODER-Glied 01 die Kippstufe M-FF3A mit Beginn des Taktimpulses CL4 wieder zurückgesetzt wird so daß die nachfolgende Kippstufe M-FF4 nicht mehr gesetzt werden kann. Weiterhin steuert die noch gesetzte Kippstufe M-FF3B über das UND-Glied U5 und das ODER-Glied 02 das UND-Glied U9 auf, so daß der Auswahlzähler SELC wieder weitergeschaltet wird und dieser mit dem neuen Zählerstand B die Freigabe des Speicherkippstufenpaares E/PMFF-B für den zum linearen Folgebefehl n+2a gehörigen Anzeigenänderungshinweis CH-AZ bewirkt usw.

Der Vorlaufzähler PAC pendelt in diesem Falle zunächst zwischen den Zählerabständen 2 und 1, bis im Arbeitszyklus EOZ4 wegen der Arbeitspause der Stufe 5 das Signal TREND=1 entfällt und der Taktimpuls CL4 keinen Rückzählimpuls auslösen kann. Der maximale Zählerstand 3 wird damit im Arbeitszyklus EOZ8 wieder

9

erreicht.

Die letzte Zeile von FIG 7 kennzeichnet dabei die Zuordnung der einzelnen Befehle n-3 bis n+3a als jeweils letzten und vorletzten Vorgängerbefehl LB und VLB zu den einzelnen Zählstufen A bis C in den einzelnen Arbeitszyklen EOZ2 bis EOZ8. Gleiches gilt für FIG 8.

Beim erfüllten bedingten Sprung gemäß FIG 8 dauert die Unterbrechung des normalen Arbeitsablaufes länger an, da mit dem Taktimpuls CL4 im Arbeitszyklus EOZ5 noch keine Zählerstandsänderung des Auswahlzählers SELC erfolgt. Dies wird durch das UND-Glied U5 wegen des Signales BED.NERF=0 und durch das UND-Glied U7 wegen des Signals TRUESW=0 verhindert. Über das UND-Glied U9 kann daher mit dem Taktimpuls CL4 kein Taktimpuls CL-SELC ausgelöst werden.

Auch der mit dem Taktimpuls CL2 im Arbeitszyklus EOZ5 normalerweise ausgelöste Ladeimpuls L-VAC wird unterdrückt, da das UND-Glied U10 in FIG 6A wegen der Signale BED-NERF=0 und TRUESW=0 gesperrt bleibt. Der im Speicherkippstufenpaar E/PMFF-A abgespeicherte Anzeigenänderungshinweis CH-AZ für den Befehl n+1a bleibt daher weiter ungültig. Außerdem sperrt die im Arbeitszyklus EOZ6 gesetzte Kippstufe M-FF4 das UND-Glied U11, so daß nachfolgend der Zählerstand des Vorlaufzählers PAC nicht erhöht werden kann.

Da aber im Arbeitszyklus EOZ6 das Signal TRUESW wieder zu logisch Eins wird, löst der Taktimpuls CL2 über das UND Glied U10 wieder einen Ladeimpuls L-VAC für den Gültigkeitszähler VAC-A und einen Übernahmeimpuls CL-M über das UND-Glied U8 aus. Da zu diesem Zeitpunkt der zum Befehl n+1b gehörige Anzeigenänderungshinweis CH-AZ ansteht, wird dieser bei unverändertem Zählerstand A des Auswahlzählers SELC in das Speicherkippstufenpaar E/PMFF-A übernommen und dadurch der vorsorglich gespeicherte Änderungshinweis für den Befehl n+1a ersetzt, ohne daß dieser die Auswertung beeinflussen kann, da der zugehörige Gültigkeitszähler VAC-A bis zur Umschaltung den Zählerstand 0 beibehalten hat.

Während der Arbeitsunterbrechung für die Stufe 5 in den Arbeitszyklen EOZ6 und EOZ7 bleiben wegen des Signals TREND=0 die mit dem Taktimpuls CL4 normalerweise ausgelösten Rückzählimpulse für den Vorlaufzähler PAC und die Gültigkeitszähler VAC... zunächst aus, so daß der Vorlaufzähler PAC auf den Zählerstand 3 hochlaufen und damit in den normalen Arbeitsablauf bei vollem Fließband überleiten kann.

Im Unterschied zum Ablaufdiagramm von FIG 7 wird also bei einem erfüllten bedingten Sprung gemäß FIG 8 durch die Unterbrechung der Fortschaltung des Auswahlzählers SELC dasselbe Speicherkippstufenpaar, im vorliegenden Falle die Kippstufen E/PMFF-A, zweimal nacheinander mit den Signalen CH-AZ für zwei unterschiedliche Befehle, nämlich zunächst n+1a und dann n+1b, belegt.

Ähnliches gilt insgesamt, wenn die Ausführung des Befehles n-1 in der Stufe 5 statt - wie dargestellt - eines Arbeitszyklusses zwei Arbeitszyklen, also die beiden Arbeitszyklen EOZ4 und EOZ5, erfordert. In diesem Falle wird zwar bei einem nicht erfüllten Sprung die Kippstufe M-FF4 in FIG 6A für die Dauer des Arbeitszyklusses EOZ6 ebenfalls gesetzt. Diese sperrt dann aber wegen des erst im Arbeitszyklus EOZ6 auftretenden Signales BED.NERF=1 über das UND-Glied U6 das UND-Glied U8 und verhindert damit die Übernahme des zum dann bereits interpretierten Befehl n+1b gehörigen Signals CH-AZ in das irrtümlich noch ausgewählte Speicherkippstufenpaar E/PMFF-A. Gleichzeitig wird mit dem über das UND-Glied U6 angesteuerten UND-Glied U4 die Erzeugung des Übernahmeimpulses CL-PAZ für die Abspeicherung der Anzeige PAZ für den Befehl n+1b in FIG 3 verhindert, der jeweils am Ende eines in Stufe 3 bearbeiteten Befehles mit dem Taktimpuls CL4 bei Vorliegen von TRUSW ausgelöst wird.

Im übrigen steuern bei unterschiedlichen Befehlsausführungszeiten in der Stufe 5 oder bei sonstigen Verzögerungen und Arbeitspausen in den übrigen Fließbandstufen, weil z.B. der Befehlspuffer leergelaufen oder eine Konfliktsituation aufgetreten ist, die Signale TREND und TRUESW die zeitgerechte Zuordnung der Speicherkippstufenpaare zu den Signalen CH-AZ der einzelnen Befehle. Auch werden bei jedem neuen Anlaufen des Fließbandes die einzelnen Zähler und Kippstufen gesondert zurückgesetzt, was im einzelnen nicht dargestellt ist.

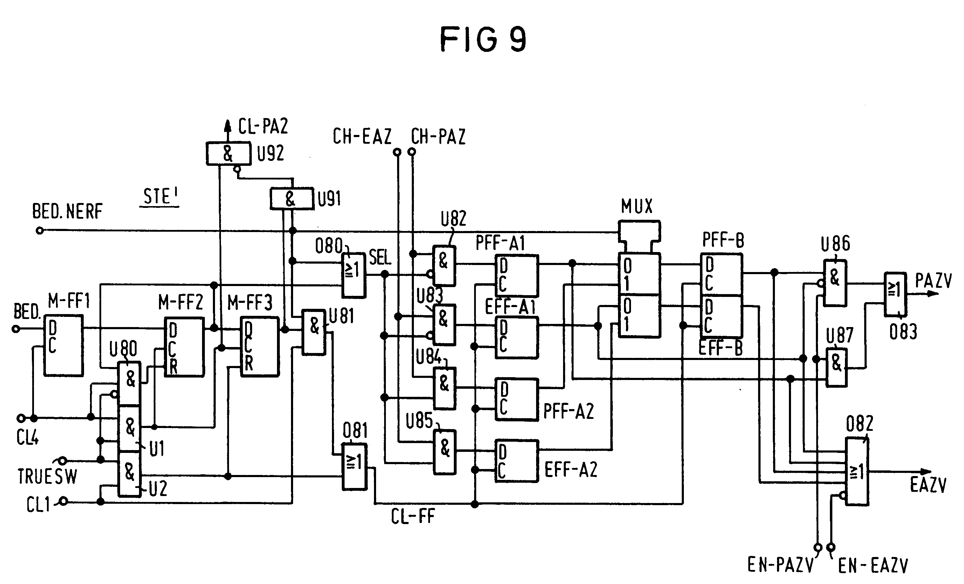

FIG 9 zeigt ein weiteres Ausführungsbeispiel für die Anzeigeüberwachungseinrichtung AZ-CONTROL von FIG 2, bei der der jeweilige Anzeigenänderungshinweis CH-EAZ bzw. CH-PAZ für einen Befehl nicht in einer vorübergehend als befehlsindividuelles Speicherelement wirkenden Kippstufe gespeichert wird, sondern nacheinander in, den relevanten Verarbeitungsstufen des Fließbandes zugeordneten Speicherkippstufenpaaren E/PFF-A und E/PFF-B, wobei der Anzeigenänderungshinweis entsprechend der Wanderung des Befehles von Verarbeitungsstufe zu Verarbeitungsstufe von Speicherkippstufenpaar zu Speicherkippstufenpaar wandert. Auch unterscheidet sich dieses Ausführungsbeispiel vom vorangehend beschriebenen dadurch, daß es lediglich auf die Minimalerfordernisse für die Sprungbefehlsentscheidung entsprechend den gezeigten Arbeitsabläufen abgestellt ist, um lediglich den vom Ausführungsbeispiel gemäß FIG 5 bis 8 abweichenden Steuerungsmechanismus anzudeuten.

Im vorliegenden Falle sind zwei Eingangskippstufenpaare E/PFF-A1 und E/PFF-A2 vorgesehen, die abhängig vom Auswahlsignal SEL den anliegenden Anzeigenänderungshinweis CH-EAZ bzw. CH-PAZ über das jeweils vorgeschaltete UND-Glied U82 bis U85 übernehmen, wenn ein Taktimpuls CL-FF wirksam wird. Die Ausgänge dieser beiden Kippstufenpaare werden dann wahlweise durch einen dazwischengeschalteten Multiplexer als Auswahlschaltglied auf die Eingänge des Speicherkippstufenpaares E/PFF-B geschaltet, die ebenfalls mit dem Signal CL-FF getaktet werden. Welche der Ausgänge der beiden Eingangsspeicherkippstufenpaare E/PFF-A1 und E/PFF-A2 jeweils durchgeschaltet werden, ist vom Signal BED.NERF abhängig. Die Ausgänge der Kippstufenpaare E/PFF-A1 und E/PFF-B sind dann in gleicher Weise wie in FIG 6C zur Bildung der Gültigkeitssignale EAZV bzw. PAZV mit den Eingängen einer Gruppe von UND-Gliedern U86 und U87 und ODER-Gliedern 082 und 083 verbunden, wobei das Kippstufenpaar E/PFF-B immer die Signale CH-AZ für den jeweils vorletzten Vorgängerbefehl VLB liefert.

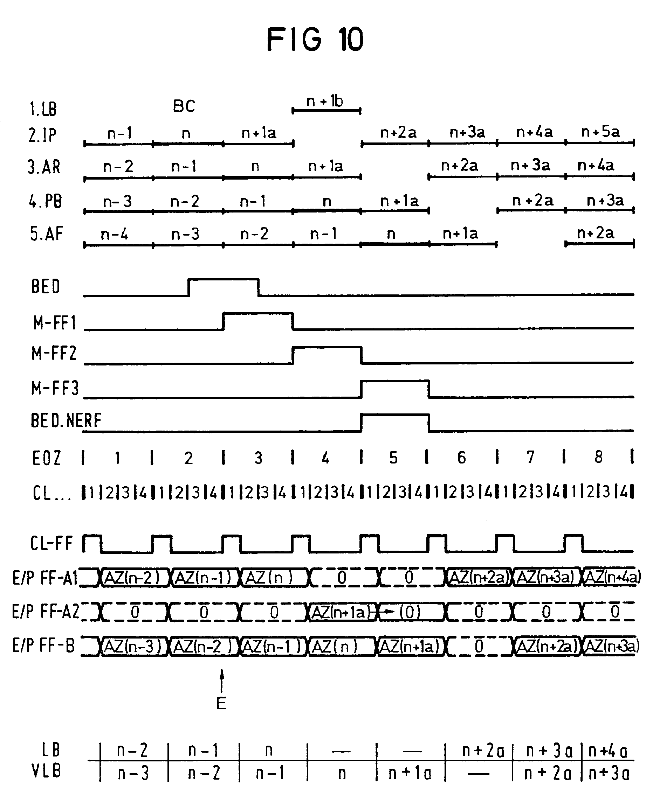

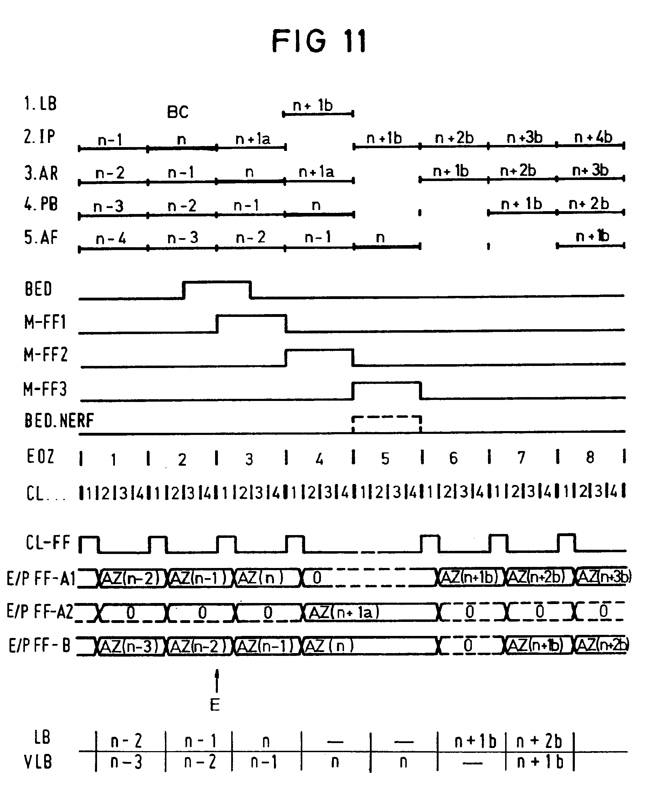

Die Signale SEL und CL-FF liefert wiederum eine aus den Kippstufen M-FF1, M-FF2 und M-FF3 bestehende Reihenschaltung, die in gleicher Weise wie die von FIG 6A mit dem Taktimpuls CL4 abhängig vom Signal TRUESW=1 über das UND-Glied U1 getaktet werden und das Signal BED=1 bei einem erkannten bedingten Sprung auswerten und von Stufe zu Stufe weiterleiten, wie aus den zugehörigen Diagrammen von FIG 10 und FIG 11 ersichtlich ist.

Mit den Taktimpulsen CL1 werden abhängig vom Signal TRUESW=1 über das UND-Glied U2 Taktimpulse CL-FF ausgelöst, die die Speicherkippstufenpaare takten, wobei im Regelfall SEL=0 gilt, so daß der jeweils anstehende Anzeigenänderungshinweis CH-EAZ bzw. CH-PAZ über das UND-Glied U83 bzw. U82 der Speicherkippstufe EFF-A1 bzw. PFF-A1 zugeführt und mit dem jeweils nachfolgenden Taktimpuls CL-FF an die Speicherkippstufen EFF-B bzw. PFF-B übergeben wird.

Am Ende eines Arbeitszyklus stehen daher wie bei dem anderen Ausführungsbeispiel bei vollgelaufenem Fließband jeweils nur die Aussagen zu den sich gerade in Stufe 3 und Stufe 4 in Bearbeitung befindlichen Befehlen, z.B. am Ende des Arbeitszyklus EOZ1 zu den Befehlen n-2 und n-3, zur Verfügung, während der gerade in der Stufe 5 die Ausführung beendende Befehl n-4 die zu berücksichtigende Anzeige EAZ liefert.

Nach Interpretation eines bedingten Sprungbefehles n wird wegen des Signals BED=1 zu Beginn des Arbeitszyklus EOZ3 die aus den Kippstufen M-FF1 bis M-FF3 bestehende Steuerschiebekette geladen, so daß mit Setzen der Kippstufe M-FF2 im nachfolgenden Arbeitszyklus EOZ4 über das ODER Glied 080 die UND-Glieder U82 und U83 gesperrt und das Signal CH-EAZ bzw. CH-PAZ für den Befehl n+1a mit dem UND-Glied U85 bzw. U84 auf den Eingang der Eingangskippstufe EFF-A2 bzw. PFF-A2 umgeschaltet wird. Diese Umschaltung wird anschließend solange aufrechterhalten, bis bei einem erfüllten Sprung die Kippstufe M-FF2 wieder zurückgesetzt ist oder bei einem nicht erfüllten Sprung das Signal BED.NERF=1 beendet ist. Das jeweilige Signal CH-EAZ bzw. CH-PAZ für den Befehl n+1a ist daher vorläufig nicht für das Signal EAZV bzw. PAZV auswertbar. Handelt es sich entsprechend FIG 10 um einen nicht erfüllten Sprung, dann wird mit Setzen der Kippstufe M-FF3 durch den Taktimpuls CL1 das UND-Glied U81 aufgesteuert und über das ODER Glied 081 trotz TRUESW=0 ein Ersatzschiebeimpuls CL-FF ausgelöst, so daß das Signal CH-AZ für den Befehl n+1a im Arbeitszyklus EOZ5 über das wegen BED.NERF=1 umgeschaltete Auswahlschaltglied MUX in die zugehörige Speicherkippstufe des Kippstufenpaares E/PFF-B übernommen wird.

Da mit Ende des Arbeitszyklus EOZ5 die Umschaltung der UND-Glieder U82 bis U85 wieder aufgehoben ist, wird der nachfolgende Anzeigenänderungshinweis CH-AZ für die weiteren Folgebefehle n+2a usw. wieder vom ersten Eingangskippstufenpaar E/PFF-A1 übernommen usw..

Handelt es sich dagegen gemäß FIG 11 um einen erfüllten bedingten Sprung, dann unterbleibt im Arbeitszyklus EOZ5 der zusätzliche Schiebetakt CL-FF und die Signalzustände der Kippstufenpaare E/PFF-A1, E/PFF-A2 und E/PFF-B bleiben unverändert. Durch das Rückschalten auf die Eingänge des Kippstufenpaares E/PFF-A1 am Ende des Arbeitszyklus EOZ4 wird mit dem Taktimpuls CL-FF zu Beginn des Arbeitszyklus EOZ6 auf den Anzeigenänderungshinweis CH-AZ der Folgebefehle n+1b usw. umgesteuert und das im Eingangskippstufenpaar E/PFF-A2 zwischengespeicherte Signal CH-AZ für den nicht auszuführenden Folgebefehl n+1a bei der Bildung des Ausgangssignales EAZV bzw. PAZV unterdrückt.

Für den Fall, daß aus irgendeinem Grund, weil z.B. der Befehlspuffer leergelaufen ist, auf den Befehl n in Stufe 2 zunächst kein weiterer Befehl n+1a folgt und das von der Stufe 3 ausgelöste Signal TRUESW bis zum Ende der Ausführung des Befehles n in Stufe 5 auf logisch Null bleibt, dann entfallen am Ausgang des UND-Gliedes U1 nach dem Setzen der Kippstufe M-FF2 die weiteren Taktimpulse und die Kippstufe M-FF2 wird bis zum Erscheinen des Signals TRUESW=1 nicht zurückgesetzt, so daß die UND-Glieder U84 und U85 aufgesteuert bleiben. Das nach der Unterbrechung in der Stufe 2 für den ersten Folgebefehl anfallende Signal CH-AZ würde daher mit dem Taktimpuls CL1 in das Speicherkippstufenpaar E/PFF-A2 übernommen und wäre für die Auswertung verloren, weil erst der nachfolgende Taktimpuls CL4 die Umschaltung aufheben würde. Das UND-Glied 80 setzt in diesem Falle durch Auswerten der Signalkombination TRUESW & M-FF2 & CL4 die Kippstufe M-FF2 rechtzeitig wieder zurück.

Die letzte Zeile von FIG 10 und FIG 11 zeigt jeweils die Zuordnung der einzelnen Befehle n-3 bis n+2b des letzten Vorgängerbefehls LB in einem der Kippstufenpaare E/PFF-A1 oder E/PFF-A2 und als vorletzten Vorgängerbefehl VLB im Kippstufenpaar E/PFF-B.

Vergleicht man die beiden Lösungsvarianten von FIG 6 und FIG 9 miteinander, so unterscheiden sie sich im wesentlichen dadurch, daß bei dem Ausführungsbeispiel von FIG 6 die Ladezeitpunkte und die Gültigkeitsbereiche logisch voneinander getrennt sind, während beim Ausführungsbeispiel von FIG 9 der Schiebetakt CL-FF beides festlegt. Die Anordnung von FIG 6 ist daher leichter den jeweils gegebenen Fließbandbedingungen anpaßbar.

Ein weiterer Unterschied besteht in der Anzahl der vorgesehenen Speicherkippstufen für die Anzeigenänderungshinweise CH-AZ. Statt der vorgesehenen drei Speicherkippstufenpaare bei der Anordnung von FIG 6 könnten ebenfalls nur zwei Speicherkippstufenpaare verwendet werden, da bei den gewählten Entscheidungszeitpunkten jeweils eine der drei Aussagen bereits für ungültig erklärt ist. Ebenso könnte bei der Anordnung von FIG 9 ein weiterer Schiebekippstufenpaar dem Kippstufenpaar E/PFF-B nachgeschaltet sein. Auch in diesem Falle steigert die größere Anzahl der Kippstufen die Anpassungsfähigkeit, da für die zu treffende Entscheidung nicht das Ende des jeweiligen Arbeitszyklus und damit die Anzeige des gerade ausgeführten Befehls abgewartet werden muß.

## Patentansprüche

1. Verfahren zur Bearbeitung von Sprungbefehlen in nach dem Fließbandprinzip arbeitenden Datenverarbeitungsanlagen mit einem Befehlsaufbereitungsprozessor (PLU) für die Bearbeitungsstufen Befehlslesen (LB), Befehlsinterpretation (IP), Adressenrechnen (AR) und Parameterbereitstellung (PB), mit einem Befehlsausführungsprozessor (EXU) für die eigentliche Befehlsausführung (AF) und mit einem gemeinsamen Puffer- und Arbeitsspeicher, wobei bei einem nicht erfüllten unbedingten Sprungbefehl der linear nachfolgende Befehl des Programmes im nachfolgenden Arbeitszyklus interpretiert wird und bei einem erfüllten unbedingten Sprungbefehl in der nachfolgenden Adressenrechnungsphase zunächst die Adresse des den neuen Programmzweig einleitenden Befehls berechnet und dieser Befehl aus dem Puffer- und Arbeitsspeicher gelesen werden muß, bevor er interpretiert werden kann, während die Behandlung von bedingten Sprungbefehlen von der nach der Befehlsausführung des unmittelbar vorangehenden Befehles gültigen Anzeige abhängig ist, wobei bei einer von einem Vorläuferbefehl stammenden und zum Zeitpunkt der Interpretation eines Befehls bereits feststehenden, nicht mehr veränderbaren Anzeige der bedingte Sprungbefehl wie ein unbedingter Sprungbefehl behandelt wird,
   **dadurch gekennzeichnet,**
   - daß in der Befehlsinterpretationsstufe (IP) jeder Befehl geprüft wird, ob ein vorgegebener Befehl mit durch direkte, keine vorherige Adressenberechnung erfordernder Adressierung unmittelbar zugänglichen und in einem Arbeitszyklus verarbeitbaren Operanden vorliegt,
   - daß das Ergebnis dieser Prüfung als Anzeigenänderungshinweis (CH-PAZ) gespeichert wird,
   - daß für jeden in der Befehlsinterpretationsstufe (IP) ermittelten vorgegebenen Befehl bereits im nachfolgenden Adressenrechenzyklus die bei der eigentlichen Befehlsausführung sich ergebende Anzeige berechnet und als vorausberechnete Anzeige (PAZ) gespeichert wird,
   - daß bei einem, auf einen ermittelten vorgegebenen Befehl (n-1) unmittelbar folgenden bedingten Sprungbefehl (n) aufgrund des gespeicherten Anzeigenänderungshinweises (CH-PAZ) der bedingte Sprungbefehl (n) wie ein unbedingter Sprungbefehl behandelt und bereits in der Befehlsinterpretationsphase dieses Befehles (n) anhand der vorliegenden vorausberechneten Anzeige (PAZ) des Vorläuferbefehls (n-1) geprüft wird, ob die Sprungbedingung erfüllt ist oder nicht und
   - daß bei nicht erfüllter Sprungbedingung als nächster Befehl unmittelbar der linear nachfolgende Befehl (n+1a) des Programmes interpretiert wird.

2. Verfahren nach Anspruch 1,
   **dadurch gekennzeichnet,**
   - daß in der Befehlsinterpretationsstufe (IP) jeder Befehl außerdem geprüft wird, ob dieser Befehl (n-1) bei seiner Ausführung die vom Vorgängerbefehl (n-2) stammende gültige Anzeige (EAZ bzw. PAZ) noch verändern kann,
   - daß das Ergebnis dieser Prüfung für jeden interpretierten Befehl als Anzeigenänderungshinweis (CH-EAZ) ebenfalls gespeichert wird,
   - daß bei einem, auf einen ermittelten vorgegebenen Befehl (n-2) nicht unmittelbar folgenden bedingten Sprungbefehl (n) anhand der gespeicherten Anzeigenänderungshinweise (CH-PAZ, CH-EAZ) geprüft wird, ob die gültige Anzeige (EAZ bzw. PAZ) bei m auf die Befehlsinterpretationsstufe (IP) bis zur Ausführung eines Befehles (n) folgenden Verarbeitungsstufen des Fließbandes von einem vorgegebenen Befehl als einem der m-1 -ten Vorläuferbefehle (n-2) stammt und ob die vorausberechnete Anzeige (PAZ) durch gegebenenfalls nachfolgende Vorläuferbefehle (n-1) nicht mehr geändert werden kann, und

- daß bei Erfüllung dieser Bedingungen der bedingte Sprungbefehl ebenfalls wie ein unbedingter Sprungbefehl behandelt und bereits in der Befehlsinterpretationsphase dieses Befehles (n) anhand der vorausberechneten Anzeige (PAZ) eines zu berücksichtigenden Vorläuferbefehles (n-2) geprüft wird, ob die Sprungbedingung erfüllt ist oder nicht.

3. Verfahren nach Anspruch 2,
   **dadurch gekennzeichnet,**
   - daß bei Fehlen einer von einem vorgegebenen Befehl stammenden gültigen vorausberechneten Anzeige (PAZ) anhand der bis zur endgültigen Ausführung der jeweils zugehörigen Befehle gespeicherten Anzeigenänderungshinweise (CH-EAZ) bei jeder Befehlsinterpretation geprüft wird, ob die bei der Befehlsausführung jeweils gebildete und zur Zeit gültige Anzeige (EAZ) bis zur Ausführung des gerade interpretierten Befehles noch geändert werden kann, und
   - daß bei nicht mehr veränderbarer Anzeige (EAZ) ein zu interpretierender bedingter Sprungbefehl wie ein unbedingter Sprungbefehl behandelt und dieser Befehl bereits in der Befehlsinterpretationsphase anhand der vorliegenden Anzeige (EAZ) geprüft wird, ob die Sprungbedingung erfüllt ist oder nicht.

4. Verfahren nach Anspruch 2 oder 3,
   **dadurch gekennzeichnet,** daß bei m (m=3) auf die Befehlsinterpretationsstufe (IP) bis zur Ausführung eines Befehles (n) folgenden Verarbeitungsstufen des Fließbandes die Anzeigenänderungshinweise (CH-PAZ und CH-EAZ) von mindestens m-1 aufeinanderfolgenden unmittelbaren Vorläuferbefehlen (n-2 und n-1) gespeichert werden.

5. Verfahren nach den Ansprüchen 3 und 4,
   **dadurch gekennzeichnet,** daß beim Vorliegen der vom ältesten (n-3) der maximal m Vorläuferbefehle (n-3, n-2, n-1) bewirkten Anzeige (EAZ) immer bereits zum Ende der Befehlsinterpretationsphase eines bedingten Sprungbefehles (n) lediglich m-1 Anzeigenänderungshinweise (CH-EAZ) zu den m-1 unmittelbar vorangehenden Vorläuferbefehlen (n-2, n-1) für die Entscheidung über die weitere Behandlung des bedingten Sprungbefehles ausgewertet werden und daß abhängig von der vom ältesten Vorläuferbefehl (n-3) bewirkten neuen Anzeige (EAZ) bei einem als unbedingten Sprungbefehl zu behandelnden bedingten Sprungbefehl (n) geprüft wird, ob der Sprung erfüllt ist oder nicht.

6. Verfahren nach einem der Ansprüche 1 bis 5,
   **dadurch gekennzeichnet,** daß die die vorgegebene Anzahl von zu speichernden Anzeigenänderungshinweisen (CH-PAZ und CH-EAZ) aufnehmenden, jeweils Paare bildenden Speicherelemente (EMFF-A/PMFF-A bis EMFF-C/PMFF-C) den einzelnen Befehlen direkt in zyklischer Folge zugeordnet werden.

7. Verfahren nach Anspruch 6,
   **dadurch gekennzeichnet,** daß die Gültigkeitsperiode der in den einzelnen Speicherelementenpaaren (E/PMFF-A bis E/PMFF-C) gespeicherten Anzeigenänderungshinweise (CH-EAZ und CH-PAZ) unabhängig von der jeweiligen Belegungsdauer der Speicherelemente jeweils gesondert und allein vom Fortgang der Befehlsverarbeitung abhängig festlegbar ist.

8. Verfahren nach Anspruch 6 und 7,
   **dadurch gekennzeichnet,** daß zur Festlegung der jeweiligen Gültigkeitsperiode der einzelnen gespeicherten Anzeigenänderungshinweise (CH-EAZ und CH-PAZ) ein die Bearbeitung eines Befehles in der der Befehlsinterpretationsstufe (IP) folgenden Stufe (AR) anzeigendes Signal (TRUESW) und ein jeweils während des letzten Arbeitzyklus der zur Ausführung eines Befehls benötigten Arbeitszyklen erzeugtes Endesignal (TREND) zusammenwirken.

9. Verfahren nach Anspruch 1 bis 5,
   **dadurch gekennzeichnet,** daß die die vorgegebene Anzahl von zu speichernden Anzeigenänderungshinweisen (CH-EAZ und CH-PAZ) aufnehmenden Speicherelementenpaaren den auf die Befehlsinterpretationsstufe (IP) folgenden Verarbeitungsstufen des Fließbandes der Reihe nach individuell zugeordnet sind und daß jeder Anzeigenänderungshinweis jeweils entsprechend der Weitergabe des zugehörigen Befehles an die nachfolgende Verarbeitungsstufe von Speicherelement zu Speicherelement weiterge-

EP 0 400 194 B1

reicht wird.

10. Verfahren nach einem der Ansprüche 6 bis 9,
**dadurch gekennzeichnet,** daß die Steuerimpulse für die folgerichtige Abspeicherung der jeweils gültigen Anzeigenänderungshinweise (CH-EAZ und CH-PAZ) und deren zeitgerechte Bereitstellung von einem eine Befehlsbearbeitung in der der Befehlsinterpretationsstufe (IP) folgenden Verarbeitungsstufe (AR) jeweils anzeigenden Signal (TRUESW) in Verbindung mit ausgewählten Taktimpulsen (CL1, CL2 und CL4) der die Arbeitszyklen (EOZ) bildenden Taktimpulse (CL1 bis CL4) abgeleitet werden.

11. Verfahren nach Anspruch 10,
**dadurch gekennzeichnet,** daß bei einem als bedingten Sprungbefehl zu behandelnden Sprungbefehl (n) die Ableitung der Steuerimpulse für die folgerichtige Abspeicherung und die Bereitstellung der jeweils als gültig zu wertenden Anzeigenänderungshinweise (CH-EAZ bzw. CH-PAZ) durch sich auf den bedingten Sprungbefehl beziehende Steuersignale (BED und BED.NERF) beeinflußt wird.

12. Anordnung zur Bearbeitung von Sprungbefehlen in nach dem Fließbandprinzip arbeitenden Datenverarbeitungsanlagen mit einem Befehlsaufbereitungsprozessor (PLU) für die Bearbeitungsstufen Befehlslesen (LB), Befehlsinterpretation (IP), Adressenrechnen (AR) und Parameterbereitstellung (PB), mit einem Befehlsausführungsprozessor (EXU) für die eigentliche Befehlsausführung (AF) und mit einem gemeinsamen Puffer- und Arbeitsspeicher, wobei bei einem nicht erfüllten unbedingten Sprungbefehl der linear nachfolgende Befehl des Programmes im nachfolgenden Arbeitszyklus interpretiert wird und bei einem erfüllten unbedingten Sprungbefehl in der nachfolgenden Adressenrechnungsphase zunächst die Adresse des den neuen Programmzweig einleitenden Befehls berechnet und dieser Befehl aus dem Puffer- und Arbeitsspeicher gelesen werden muß, bevor er interpretiert werden kann, während die Behandlung von bedingten Sprungbefehlen von der nach der Befehlsausführung des unmittelbar vorangehenden Befehles gültigen Anzeige abhängig ist, wobei bei einer von einem Vorläuferbefehl stammenden und zum Zeitpunkt der Interpretation eines Befehls bereits feststehenden, nicht mehr veränderbaren Anzeige der bedingte Sprungbefehl wie ein unbedingter Sprungbefehl behandelt wird,
**gekennzeichnet**
- durch mit den Einrichtungen (IDEC) für die Befehlsinterpretation gekoppelte Einrichtungen (ADW, PAZ-GEN)
-- zur Überwachung des Vorliegens eines vorgegebenen Befehls mit durch direkte, keine vorherige Adressenberechnung erfordernde Adressierung unmittelbar zugänglichen und in einem Arbeitszyklus verarbeitbaren Operanden,
-- zur Erzeugung eines Änderungshinweissignales (CH-PAZ) abhängig vom Vorliegen eines vorgegebenen Befehls und
-- zur Ermittlung und Speicherung der jeweils zugehörigen Anzeige als vorausberechnete Anzeige (PAZ)
- durch eine Anzeigenüberwachungseinrichtung (AZ-CONTROL) zur Zwischenspeicherung und Auswertung der Änderungshinweissignale (CH-PAZ) zwecks Erzeugung eines die Anzeige (PAZ) für gültig erklärenden Steuersignals (PAZV) und
- durch eine Sprungbefehlsauswerteeinrichtung (B-CONTROL) mit Einrichtungen (045, U52 bzw. 041, U48) zur Erzeugung eines die Ausführung eines unbedingten Sprungbefehles anzeigenden Steuersignales (Ausgang U47) anstelle die Ausführung eines bedingten Sprungbefehles anzeigenden Steuersignales (Ausgang U48) abhängig von dem von der Anzeigenüberwachungseinrichtung (AZ-CONTROL) gelieferten Steuersignal (PAZV) und mit Einrichtungen (VG) zur Feststellung, ob der als unbedingte Sprungbefehl zu behandelnde Sprungbefehl (n) erfüllt ist oder nicht abhängig von der vorausberechneten Anzeige (PAZ), sowie mit Einrichtungen (U53, U54) zur Umwandlung eines die Ausführung eines unbedingten Sprungbefehls anzeigenden Signals (Ausgang U52) in ein einen unbedingten erfüllten Sprung anzeigendes Steuersignal (UNB.ERF) oder in ein einen unbedingten nicht erfüllten Sprung anzeigendes Steuersignal (UNB.NERF) abhängig von der Feststellung, ob der Sprung erfüllt ist oder nicht.

13. Anordnung nach Anspruch 12,
**gekennzeichnet**
- durch in den Einrichtungen zur Ermittlung der vorausberechneten Anzeige (PAZ) vorgesehene zusätzliche Einrichtungen (U31) zur Erzeugung von sich auf die bei der Befehlsausführung gebildete Anzeige (EAZ) beziehende Änderungshinweissignalen (CH-EAZ) zu jedem interpretierten Befehl,

**14**

- durch in der Anzeigenüberwachungseinrichtung (AZ-CONTROL) vorgesehene Einrichtungen zur Speicherung und Auswertung auch dieser Anzeigenänderungshinweise (CH-EAZ) und zur Erzeugung eines zweiten, die auf der Befehlsausführungsebene gebildete Anzeige (EAZ) für gültig erklärenden Steuersignales (EAZV) und
- durch in der Sprungbefehlsauswerteeinrichtung (B-CONTROL) vorgesehene Einrichtungen (045, U47 bzw. 041, U48) zur Erzeugung eines die Ausführung eines unbedingten Sprungbefehles anzeigenden Steuersignales (Ausgang von U47) anstelle des die Ausführung eines bedingten Sprungbefehles anzeigenden Steuersignals (BED) abhängig von dem von der Anzeigenüberwachungseinrichtung (A-CONTROL) gelieferten zweiten Steuersignal (EAZV),
- durch in der Sprungbefehlsauswerteeinrichtung (B-CONTROL) weiterhin vorgesehene Einrichtungen (VG1) zur Feststellung anhand der gültigen Anzeige (EAZ), ob der als unbedingter Sprungbefehl zu behandelnde bedingte Sprungbefehl erfüllt ist oder nicht,
- durch in der Sprungbefehlsauswerteeinrichtung (B-CONTROL) außerdem vorgesehene Einrichtungen (U50, U49) zur Umwandlung eines die Ausführung eines unbedingten Sprungbefehles anzeigenden Signales (Ausgang von U47) in ein einen unbedingten erfüllten Sprung anzeigendes Steuersignal (UNB.ERF) oder in ein einen nicht erfüllten unbedingten Sprung anzeigendes Steuersignal (UNB.NERF) abhängig von der Feststellung, ob der Sprung erfüllt ist oder nicht.

14. Anordnung nach Anspruch 12 oder 13,
    **dadurch gekennzeichnet**, daß die Einrichtungen zur Ermittlung der vorausberechneten Anzeige (PAZ) aus dem bei der Bearbeitung der vorgegebenen Befehle in der Adressenrechnungsphase nicht benötigten Rechenwerk (ADW) und einem die Ergebnisanzeigen (AAD-ANZ) des Rechenwerkes (ADW) abhängig von die Art des jeweils interpretierten Befehles kennzeichnenden Signalen (AZ-SEL...) in Anzeigen (PAZ) umwandelnden und die Anzeigenänderungshinweise (CH-PAZ, CH-EAZ) liefernden Anzeigengenerator (PAZ-GEN) besteht.

15. Anordnung nach einem der Ansprüche 12 bis 14,
    **dadurch gekennzeichnet**, daß die Sprungbefehlsauswerteeinrichtung (B-CONTROL) zusätzlich Einrichtungen (VG2, U51) zur Feststellung, ob bei einem ausgeführten bedingten Sprungbefehl (n) der Sprung erfüllt ist oder nicht, und zur Erzeugung eines entsprechenden Steuersignales (BED.NERF) aufweist.

16. Anordnung nach einem der Ansprüche 12 bis 15,
    **gekennzeichnet durch**
    - eine vorgegebene Anzahl von Speicherkippstufen (PMFF-A bis PMFF-C und EMFF-A bis EMFF-C) zur Speicherung jeweils eines der erzeugten Anzeigenänderungshinweise (CH-PAZ und CH-EAZ),
    - durch einen durch Steuerimpulse (CL-SELC) zyklisch fortschaltbaren Auswahlzähler (SELC) zur Auswahl jeweils eines der von den einander entsprechenden Speicherkippstufen (PMFF-A und EMFF-A) gebildeten Kippstufenpaare (E/PMFF-A) für die Übernahme eines vorliegenden Anzeigenänderungshinweises (CH-PAZ bzw. CH-EAZ) abhängig von einem gesonderten Speichertakt (CL-M),
    - durch an die Ausgänge der Speicherkippstufenpaare (E/PMFF-A bis E/PMFF-C) angeschlossene Auswahlschalter (PMUX, EMUX) zwecks Zuordnung der sich auf dieselbe Anzeige (PAZ bzw. EAZ) beziehenden Anzeigenänderungshinweise (CH-PAZ und CH-EAZ) zum jeweils letzten bzw. vorletzten bzw. usw. Vorgängerbefehl (LB bzw. VLB bzw. usw.),
    - durch ein an die Ausgänge der Auswahlschalter (PMUX, EMUX) angeschlossenes Verknüpfungsnetzwerk (U25, U26, 022 bzw. 021) zur Erzeugung der beiden Steuersignale (PAZV bzw. EAZV) zur Gültigerklärung einer der beiden Anzeigen (PAZ bzw. EAZ) und
    - durch eine vorgeschaltete Steuereinrichtung (STE) zur Erzeugung der Steuerimpulse (CL-SELC und CL-M) für die Speicherkippstufenpaare (E/PMFF-A bis E/PMFF-C) und den Auswahlzähler (SELC) abhängig von bei der Befehlsverarbeitung im Fließband jeweils anfallenden Steuersignalen (TRUESW, CL1, CL2 und CL4) und von der Sprungbefehlsauswerteeinrichtung (B-CONTROL) gelieferten und die Ausführung eines bedingten Sprungbefehles betreffenden Steuersignalen (BED, BED.NERF).

17. Anordnung nach Anspruch 16,
    **gekennzeichnet durch**
    - einen Vorlaufzähler (PAC), dessen Zählerstand bei jedem von der Befehlsinterpretationsstufe (IP) im Fließband weitergeleiteten Befehl durch einen von der vorgeschalteten Steuereinrichtung (STE) gelieferten Steuerimpuls (CL-PAC) um einen Schritt erhöht wird und bei jedem in der Ausführungsstufe (AF) beendeten Befehl um einen Schritt erniedrigt wird,

- durch einen jedem Speicherkippstufenpaar (E/PMFF-A bis E/PMFF-C) individuell zugeordneten und durch den Auswahlzähler (SELC) ebenfalls auswählbaren Gültigkeitszähler (VAC-A bis VAC-C) zur Übernahme des jeweils vom Vorlaufzähler (PAC) bereitgestellten Zählerstandes (3) abhängig von einem durch die vorgeschaltete Steuereinrichtung (STE) gelieferten Ladeimpuls (L-VAC), wobei die Ladezählerstände aller Gültigkeitszähler (VAC...) durch die dem Vorlaufzähler (PAC) zugeführten Rückzählimpulse ebenfalls schrittweise erniedrigt werden, und

- durch den Zählerstand der Gültigkeitszähler (VAC...) jeweils überwachende Schaltglieder (011 bis 013), die beim Zählerstand "0" die Ausgangssignale der zugehörigen Speicherkippstufen (MFF-A) sperren.

18. Anordnung nach einem der Ansprüche 12 bis 15,
   **gekennzeichnet durch**
   - eine vorgegebene Anzahl (zwei) von Speicherkippstufenpaaren (E/PFF-AI und E/PFF-B), die zu einem durch Taktimpulse (CL-FF) getakteten Schieberegister in Reihe geschaltet sind, dessem Eingang die Anzeigenänderungshinweise (CH-EAZ und CH-PAZ) zugeführt werden,
   - durch ein an die Ausgänge der einzelnen Speicherkippstufenpaare (E/PFF-AI und E/PFF-B) angeschlossenes Verknüpfungsnetzwerk (U86, U87, 083 bzw. 082) zur Erzeugung der beiden Steuersignale (PAZV bzw. EAZV) zur Gültigerklärung einer der beiden Anzeigen (PAZ bzw. EAZ)
   - durch ein zum ersten Speicherkippstufenpaar (E/PFF-A1) der Schieberegisteranordnung parallel angeordnetes weiteres Speicherkippstufenpaar (E/PFF-A2),
   - durch einen Auswahlschalter (MUX) zur Verbindung des ersten Speicherkippstufenpaares (E/PFF-A1) oder des dazu parallel angeordneten Kippstufenpaares (E/PFF-A2) mit dem zweiten Kippstufenpaar (E/PFF-B) der Schieberegisteranordnung,
   - durch eine Umsteuereinrichtung (U82 bis U85) zur Umschaltung des anstehenden Anzeigenänderungshinweises (CH-EAZ, CH-PAZ) auf den Eingang des zum ersten Kippstufenpaar der Schieberegisteranordnung parallel angeordneten Kippstufenpaares (P/EFF-A2) abhängig von einem Umschaltesteuersignal (SEL) und
   - durch eine vorgeschaltete Steuereinrichtung (STE') zur Erzeugung der Taktimpulse (CL-FF) und des Umschaltesteuersignals (SEL) abhängig von bei der Befehlsverarbeitung im Fließband jeweils anfallenden Steuersignalen (TRUESW, CL1, CL4) und von von der Sprungbefehlsauswerteeinrichtung (B-CONTROL) gelieferten und die Ausführung eines bedingten Sprungbefehles (n) betreffenden Steuersignalen (BED, BED.NERF).

19. Anordnung nach einem der Ansprüche 16 bis 18,
   **dadurch gekennzeichnet**, daß
   - die vorgeschaltete Steuereinrichtung (STE bzw. STE') eine Reihe von in Reihe geschalteten Kippstufen (M-FF1 bis M-FF4 bzw. M-FF1 bis M-FF3) aufweist,
   - daß das die Ausführung eines bedingten Sprungbefehles anzeigende Steuersignal (BED) der ersten Merkkippstufe (M-FF1) zugeführt und von dieser gleichzeitig mit der von der auf die Befehlsinterpretationsstufe (IP) folgenden Verarbeitungsstufe (AR) erfolgenden Behandlung des zugehörigen Sprungbefehles (n) gespeichert wird,
   - daß das in der ersten Merkkippstufe (M-FF1) gespeicherte Steuersignal (BED) jeweils mit jedem von der auf die Befehlsinterpretationsstufe (IP) folgenden Verarbeitungsstufe (AR) in Behandlung genommenen Folgebefehl (z.B. n+1a) synchron mit den Arbeitszyklen (EOZ) des Fließbandes von Merkkippstufe (M-FF2) zu Merkkippstufe (M-FF3) weitergeleitet wird und
   - daß Verknüpfungsschaltglieder abhängig vom jeweiligen Setzzustand der zweiten und restlichen Merkkippstufen (M-FF2 und M-FF3) die für die Ansteuerung der Speicherkippstufen (P/EFF-A1 und P/EFF-B) benötigten Takt- und Steuersignale in der jeweils benötigten Folge liefern.

## Claims

1. Method for processing branch instructions in pipeline data-processing systems, having a pipeline unit (PLU) for the processing stages of instruction prefetch (LB), instruction interpretation (IP), address computation (AR) and parameter provision (PB), having an instruction execution unit (EXU) for the actual instruction execution (AF) and having a joint buffer and main memory, in which method, in the case of an unperformed unconditional branch instruction, the linearly following instruction of the program is interpreted in the following working cycle and, in the case of a performed unconditional branch instruction, in the following address computation phase first of all the address of the instruction introducing the new program branch is calculated and this instruction has to be read from the buffer and main memory before it can be interpreted, while the handling of conditional branch instructions is dependent on the valid indication after instruction execution of the directly preceding instruction, the conditional branch instruction being handled like an unconditional branch instruction in the case of a no longer alterable indication originating from a predecessor instruction and already fixed at the time of the interpretation of an instruction, characterized

- in that in the instruction interpretation stage (IP) each instruction is checked to ascertain whether it is a preset instruction with operands which are directly accessible by direct addressing, requiring no prior address computation, and which can be processed in one working cycle,
- in that the result of this check is stored as an indication alteration flag (CH-PAZ),
- in that for each preset instruction determined in the instruction interpretation stage (IP) the indication occurring in the actual instruction execution is already calculated in the following address computation cycle and is stored as a precalculated indication (PAZ),
- in that, in the case of a conditional branch instruction (n) directly following a determined preset instruction (n-1), on account of the stored indication alteration flag (CH-PAZ), the conditional branch instruction (n) is handled like an unconditional branch instruction and it is checked already in the instruction interpretation phase of this instruction (n) on the basis of the existing precalculated indication (PAZ) of the predecessor instruction (n-1) whether the branch condition is satisfied or not and
- in that, in the case of an unsatisfied branch condition, directly the linearly following instruction (n+1a) of the program is interpreted as the next instruction

2. Method according to Claim 1, characterized
- in that in the instruction interpretation stage (IP) each instruction is also checked to ascertain whether this instruction (n-1) can still alter in its execution the valid indication (EAZ or PAZ) originating from the predecessor instruction (n-2),
- in that the result of this check is likewise stored for each interpreted instruction as an indication alteration flag (CH-EAZ),
- in that, in the case of a conditional branch instruction (n) not directly following a determined preset instruction (n-2), it is checked on the basis of the stored indication alteration flags (CH-PAZ, CH-EAZ) whether, in the case of m pipeline processing stages following the instruction interpretation stage (IP) up to the execution of an instruction (n), the valid indication (EAZ or PAZ) originates from a preset instruction as one of the m-1th predecessor instructions (n-2) and whether the precalculated indication (PAZ) can no longer be altered by any following predecessor instructions (n-1) there may be, and
- in that, if these conditions are satisfied, the conditional branch instruction is likewise handled like an unconditional branch instruction and it is checked already in the instruction interpretation phase of this instruction (n) on the basis of the precalculated indication (PAZ) of a predecessor instruction (n-2) to be considered whether the branch condition is satisfied or not.

3. Method according to Claim 2, characterized
- in that, in the absence of a valid precalculated indication (PAZ) originating from a preset instruction, it is checked on the basis of the indication alteration flags (CH-EAZ), stored up to the final execution of the respectively associated instructions, in each instruction interpretation whether the indication (EAZ) respectively formed in the instruction execution and currently valid can still be altered up to the execution of the instruction in the process of being interpreted, and
- in that, in the case of a no longer alterable indication (EAZ), a conditional branch instruction to be interpreted is handled like an unconditional branch instruction and this instruction is checked already in the instruction interpretation phase on the basis of the existing indication (EAZ) to ascertain whether the branch condition is satisfied or not.

4. Method according to Claim 2 or 3, characterized in that, in the case of m (m=3) pipeline processing stages following the instruction interpretation stage (IP) up to the execution of an instruction (n), the indication alteration flags (CH-PAZ and CH-EAZ) of at least m-1 successive direct predecessor instructions (n-2 and n-1) are stored.

5. Method according to Claims 3 and 4, characterized in that, if the indication (EAZ) effected by the oldest (n-3) of the at most m predecessor instructions (n-3, n-2, n-2) is obtained, for the decision on further handling of the conditional branch instruction there are always evaluated already at the end of the instruction interpretation phase of a conditional branch instruction (n) only m-1 indication alteration flags (CH-EAZ) with respect to the m-1 directly preceding predecessor instructions (n-2, n-1) and in that, depending on the new indication (EAZ) effected by the oldest predecessor instruction (n-3), in the case of a conditional branch instruction (n) to be handled as an unconditional branch instruction it is checked whether the branch has been performed or not.

6. Method according to one of Claims 1 to 5, characterized in that the memory elements (EMFF-A/PMFF-A to EMFF-C/PMFF-C) respectively forming pairs and receiving the preset number of indication alteration flags (CH-PAZ and CH-EAZ) to be stored are assigned to the individual instructions directly in cyclical sequence.

7. Method according to Claim 6, characterized in that the period of validity of the indication alteration flags (CH-EAZ and CH-PAZ) stored in the individual memory element pairs (E/PMFF-A to E/PMFF-C) can be fixed separately in each case, independently of the respective period of occupation of the memory elements and dependent alone on the progress of the instruction processing.

8. Method according to Claims 6 and 7, characterized in that, for fixing the respective period of validity of the individual stored indication alteration flags (CH-EAZ and CH-PAZ), a signal (TRUESW), indicating the processing of an instruction in the stage (AR) following the instruction interpretation stage (IP), and an end signal (TREND), respectively generated during the last working cycle of the working cycles required for the execution of an instruction, interact.

9. Method according to Claims 1 to 5, characterized in that the memory element pairs receiving the preset number of indication alteration flags (CH-EAZ and CH-PAZ) to be stored are individually assigned one after the other to the pipeline processing stages following the instruction interpretation stage (IP) and in that each instruction alteration flag is passed on from memory element to memory element in each case according to the passing on of the associated instruction to the following processing stage.

10. Method according to one of Claims 6 to 9, characterized in that the control pulses for the properly ordered storing of the respectively valid indication alteration flags (CH-EAZ and CH-PAZ) and their provision at the correct time are derived from a signal (TRUESW), respectively indicating an instruction processing in the processing stage (AR) following the instruction interpretation stage (IP), in conjunction with selected clock pulses (CL1, CL2 and CL4) of the clock pulses (CL1 to CL4) forming the working cycles (EOZ).

11. Method according to Claim 10, characterized in that, in the case of a branch instruction (n) to be handled as a conditional branch instruction, the derivation of the control pulses for the properly ordered storing and the provision of the indication alteration flags (CH-EAZ or CH-PAZ) respectively to be evaluated as valid is influenced by control signals (BED and BED.NERF) relating to the conditional branch instruction.

12. Arrangement for processing branch instructions in pipeline data-processing systems having a pipeline unit (PLU) for the processing stages of instruction prefetch (LB), instruction interpretation (IP), address computation (AR) and parameter provision (PB), having an instruction execution unit (EXU) for the actual instruction execution (AF) and having a joint buffer and main memory, in which arrangement, in the case of an unperformed unconditional branch instruction, the linearly following instruction of the program is interpreted in the following working cycle and, in the case of a performed unconditional branch instruction, in the following address computation phase first of all the address of the instruction introducing the new program branch is calculated and this instruction has to be read from the buffer and main memory before it can be interpreted, while the handling of conditional branch instructions is dependent on the valid indication after instruction execution of the directly preceding instruction, the conditional branch instruction being handled like an unconditional branch instruction in the case of a no longer alterable indication originating from a predecessor instruction and already fixed at the time of the interpretation of an instruction, characterized
- by devices (ADW, PAZ-GEN), coupled to the devices (IDEC) for the instruction interpretation,
-- for monitoring the presence of a preset instruction with operands which are directly accessible by direct addressing requiring no prior address computation and which can be processed in a single working cycle,

-- for generating an alteration flag signal (CH-PAZ) depending on the presence of a preset instruction and

-- for determining and storing the respectively associated indication as a precalculated indication (PAZ)

- by an indication monitoring device (AZ-CONTROL) for buffer storing and evaluation of the alteration flag signals (CH-PAZ) for the purpose of generating a control signal (PAZV) declaring the indication (PAZ) to be valid and

- by a branch instruction evaluating device (B-CONTROL), having devices (045, U52 or 041, U48) for generating a control signal (output U47) indicating the execution of an unconditional branch instruction instead of a control signal (output U48) indicating the execution of a conditional branch instruction, depending on the control signal (PAZV) supplied by the indication monitoring device (AZ-control), and having devices (VG) for establishing whether the branch instruction (n) to be handled as an unconditional branch instruction has been performed or not, depending on the precalculated indication (PAZ), and also having devices (U53, U54) for the conversion of a signal (output U52) indicating the execution of an unconditional branch instruction into a control signal (UNB.ERF) indicating an unconditional performed branch or into a control signal (UNB.NERF) indicating an unconditional unperformed branch, depending on the establishing of whether the branch has been performed or not.

13. Arrangement according to Claim 12, characterized

- by additional devices (U31), provided in the devices for determining the precalculated indication (PAZ), for generating for each interpreted instruction alteration flag signals (CH-EAZ) relating to the indication (EAZ) formed in the instruction execution,

- by devices provided in the indication monitoring device (AZ-CONTROL) for storing and evaluating these indication alteration flags (CH-EAZ) as well and for generating a second control signal (EAZV), declaring the indication (EAZ) formed on the instruction execution level to be valid, and

- by devices (045, U47 or 041, U48) provided in the branch instruction evaluating device (B-CONTROL) for generating a control signal (output of U47) indicating the execution of an unconditional branch instruction instead of the control signal (BED) indicating the execution of a conditional branch instruction, depending on the second control signal (EAZV) supplied by the indication monitoring device (A-CONTROL),

- by devices (VG1) also provided in the branch instruction evaluating device (B-CONTROL) for establishing on the basis of the valid indication (EAZ) whether the conditional branch instruction to be handled as an unconditional branch instruction has been performed or not,

- by devices (U50, U49) also provided in the branch instruction evaluating device (B-CONTROL) for converting a signal (output of U47) indicating the execution of an unconditional branch instruction into a control signal (UNB.ERF) indicating an unconditional performed branch or into a control signal (UNB.NERF) indicating an unperformed unconditional branch, depending on the establishing of whether the branch has been performed or not.

14. Arrangement according to Claim 12 or 13, characterized in that the devices for determining the precalculated indication (PAZ) comprise the arithmetic unit (ADW), not required in the processing of the preset instructions in the address computation phase, and an indication generator (PAZ-GEN), converting the result indications (AAD-ANZ) of the arithmetic unit (ADW) into indications (PAZ), depending on signals (AZ-SEL...) which identify the type of respectively interpreted instruction, and supplying the indication alteration flags (CH-PAZ, CH-EAZ).

15. Arrangement according to one of Claims 12 to 15, characterized in that the branch instruction evaluating device (B-CONTROL) has in addition devices (VG2, U51) for establishing whether in the case of an executed conditional branch instruction (n) the branch has been performed or not, and for generating a corresponding control signal (BED.NERF).

16. Arrangement according to one of Claims 12 to 15, characterized by

- a preset number of storage trigger elements (PMFF-A to PMFF-C and EMFF-A to EMFF-C) for storing in each case one of the generated indication alteration flags (CH-PAZ and CH-EAZ),

- by a selection counter (SELC), which can be cyclically advanced by control pulses (CL-SELC), for the selection in each case of one of the trigger element pairs (E/PMFF-A), formed by the mutually corresponding storage trigger elements (PMFF-A and EMFF-A), for the taking over of an existing indication alteration flag (CH-PAZ or CH-EAZ), depending on a separate storage cycle (CL-M),

- by selection switches (PMUX, EMUX), connected to the outputs of the storage trigger element pairs (E/PMFF-A to E/PMFF-C), for the purpose of assignment of the indication alteration flags (CH-PAZ and CH-EAZ) relating to the same indication (PAZ or EAZ) to their respectively last or last-but-one or, and so on, predecessor instruction (LB or VLB or, and so on),

- by a switching network (U25, U26, 022 or 021), connected to the outputs of the selection switches (PMUX, EMUX), for generating the two control signals (PAZV or EAZV) for the valid declaration of one of the two indications (PAZ or EAZ) and

- by an upstream control device (STE) for generating the control pulses (CL-SELC and CL-M) for the storage trigger element pairs (E/PMFF-A to E/PMFF-C) and the selection counter (SELC), depending on control signals (TRUESW, CL1, CL2 and CL4), respectively occurring in the pipeline instruction processing, and on control signals (BED, BED.NERF) supplied by the branch instruction evaluating device (B-CONTROL) and concerning the execution of a conditional branch instruction.

17. Arrangement according to Claim 16, characterized by

- a forward counter (PAC), the counter reading of which is incremented by one step with each instruction passed on by the pipeline instruction interpretation stage (IP) by a control pulse (CL-PAC) supplied by the upstream control device (STE) and is decremented by one step with each instruction ended in the execution stage (AF),

- by a validity counter (VAC-A to VAC-C), individually assigned to each storage trigger element pair (E/PMFF-A to E/PMFF-C) and likewise selectable by the selection counter (SELC), for taking over the counter reading (3) respectively provided by the forward counter (PAC), depending on a loading pulse (L-VAC) supplied by the upstream control device (STE), the loading counter readings of all the validity counters (VAC...) being likewise decremented step by step by the counting-back pulses fed to the forward counter (PAC), and

- by switching elements (011 to 013), which respectively monitor the counter reading of the validity counters (VAC...) and at the counter reading "0" block the output signals of the associated storage trigger elements (MFF-A).

18. Arrangement according to one of Claims 12 to 15, characterized by

- a preset number (two) of storage trigger element pairs (E/PFF-A1 and E/PFF-B), which are connected in series to a shift register which is actuated by clock pulses (CL-FF) and to the input of which the indication alteration flags (CH-EAZ and CH-PAZ) are fed,

- by a switching network (U86, U87, 083 or 082), connected to the outputs of the individual latching trigger element pairs (E/PFF-A1 and E/PFF-B) , for generating the two control signals (PAZV or EAZV) for the validity declaration of one of the two indications (PAZ or EAZ)

- by a further storage trigger element pair (E/PFF-A2), arranged parallel to the first storage trigger element pair (E/PFF-A1) of the shift register arrangement,

- by a selection switch (MUX) for connecting the first storage trigger element pair (E/PFF-A1) or the trigger element pair (E/PFF-A2) arranged parallel thereto to the second trigger element pair (E/PFF-B) of the shift register arrangement,

- by a changing-over device (U82 to U85) for switching over the existing indication alteration flag (CH-EAZ, CH-PAZ) to the input of the trigger element pair (P/EFF-A2) arranged parallel to the first trigger element pair of the shift register arrangement, depending on a switching-over control signal (SEL) and

- by an upstream control device (STE') for generating the clock pulses (CL-FF) and the switching-over control signal (SEL), depending on control signals (TRUESW, CL1, CL4), respectively occurring in the pipeline instruction processing, and on control signals (BED, BED.NERF) supplied by the branch instruction evaluating device (B-CONTROL) and concerning the execution of a conditional branch instruction (n).

19. Arrangement according to one of Claims 16 to 18, characterized in that

- the upstream control device (STE or STE') has a series of series-connected trigger elements (M-FF1 to M-FF4 or M-FF1 to M-FF3),

- in that the control signal (BED) indicating the execution of a conditional branch instruction is fed to the first latching trigger element (M-FF1) and is stored by the latter simultaneously with the handling of the associated branch instruction (n) taking place by the processing stage (AR) following the in-

EP 0 400 194 B1

struction interpretation stage (IP),
- in that the control signal (BED) stored in the first latching trigger element (M-FF1) is respectively passed on from latching trigger element (M-FF2) to latching trigger element (M-FF3), with each follow-up instruction (for example n+1a) handled by the processing stage (AR) following the instruction interpretation stage (IP), synchronously with the working cycles (EOZ) of the pipeline and
- in that switching elements supply the clock signals and control signals required for the driving of the storage trigger elements (P/EFF-A1 and P/EFF-B) in the respectively required sequence, depending on the respective setting status of the second and remaining latching trigger elements (M-FF2 and M-FF3).

**Revendications**

1. Procédé pour traiter des instructions de branchement dans des installations de traitement opérant selon le principe pipeline, comportant un processeur (PLU) de préparation des instructions pour les étapes de traitement : lecture d'instructions (LB), interprétation d'instructions (IP), calcul d'adresses (AR) et préparation de paramètres (PB), un processeur d'exécution d'instructions (EXU) pour l'exécution proprement dite (AF) des instructions et une mémoire tampon et de travail commune, et dans lequel, dans le cas d'une instruction de branchement inconditionnel non satisfaite, l'instruction linéairement suivante du programme est interprétée dans le cycle de travail suivant, et dans le cas d'une instruction de branchement inconditionnel satisfaite, pendant la phase suivante de calcul d'adresses tout d'abord l'adresse d'une instruction déclenchant la nouvelle branche de programme doit être calculée et cette instruction doit être lue à partir de la mémoire tampon et de travail avant de pouvoir être interprétée, tandis que le traitement d'instructions de branchement conditionnel dépend de l'indication, valable après l'exécution de l'instruction directement précédente, et selon lequel dans le cas d'une indication, qui tire son origine d'une instruction préliminaire et est présente déjà à l'instant de l'interprétation d'une instruction et n'est plus variable, l'instruction de branchement conditionnel est traitée comme une instruction de branchement inconditionnel,
caractérisé par le fait
- que dans l'étape (IP) d'interprétation d'instructions, chaque instruction est contrôlée de manière à déterminer la présence éventuelle d'une instruction prédéterminée comportant des opérandes accessibles directement au moyen d'un adressage direct, ne nécessitant aucun calcul préalable d'adresse, et d'opérandes pouvant être traités dans un cycle de travail,
- que le résultat de ce contrôle est mémorisé en tant qu'indication de modification d'affichage (CH-PAZ),
- que pour chaque instruction prédéterminée, déterminée dans l'étage (IP) d'interprétation d'instructions, déjà lors du cycle suivant de calcul d'adresses, l'indication obtenue pour l'exécution proprement dite de l'instruction est calculée et est mémorisée en tant qu'indication préalablement calculée (PAZ),
- que dans le cas d'une instruction de branchement conditionnel (n), qui succède directement à une instruction déterminée fixée à l'avance (n-1), l'instruction de branchement conditionnel (n) est traitée à la manière d'une instruction de branchement inconditionnel, en raison de la notification mémorisée de modification d'indication (CH-PAZ), et déjà lors de la phase d'interprétation de cette instruction (n), un contrôle est effectué, sur la base de l'indication présente (PAZ), calculée auparavant, de l'instruction précédente (n-1), pour savoir si la condition de branchement est satisfaite ou non, et
- que, dans le cas où la condition de branchement n'est pas satisfaite, l'instruction linéairement suivante (n+1a) du programme est interprétée immédiatement en tant qu'instruction suivante.

2. Procédé suivant la revendication 1, caractérisé par le fait
- que dans l'étape (IP) d'interprétation d'instructions, chaque instruction est en outre contrôlée pour déterminer si cette instruction (n-1) peut encore modifier, lors de son exécution, l'indication valable (EAZ ou PAZ), qui tire son origine de l'instruction préliminaire (n-2),
- que le résultat de ce contrôle est également mémorisé pour chaque instruction interprétée, en tant que notification de modification d'indication (CH-EAZ),
- que dans le cas d'une instruction de branchement conditionnel (n) , qui ne succède pas directement à l'instruction déterminée fixée d'avance (n-2), un contrôle est effectué sur la base de la notification mémorisée de changement d'indication (CH-PAZ, CH-EAZ), pour indiquer si l'indication valable (EAZ ou PAZ) provient d'une instruction prédéterminée en tant que l'une des n-1-èmes instructions pré-

21

liminaires (n-2), dans le cas de m étapes de traitement succédant à l'étape (IP) d'interprétation d'instructions jusqu'à l'exécution d'une instruction (n), et si l'indication préalablement calculée (PAZ) ne peut plus être modifiée par des instructions préliminaires (n-1) apparaissant éventuellement ensuite, et

- que, lorsque ces conditions sont satisfaites, l'instruction de branchement conditionnel est également traitée comme une instruction de branchement inconditionnel et que déjà pendant la phase d'interprétation de cette instruction n, un contrôle est exécuté sur la base de l'indication préalablement calculée (PAZ) d'une instruction préliminaire (n-2) devant être prise en compte, pour déterminer si la condition de branchement est satisfaite ou non.

3. Procédé suivant la revendication 2, caractérisé par le fait
   - que dans le cas de l'absence d'une indication valable préalablement calculée (PAZ), qui tire son origine d'une instruction prédéterminée, un contrôle est exécuté, lors de l'interprétation de chaque instruction, sur la base des notifications de changement d'indication (CH-EAZ) mémorisées jusqu'à l'exécution finale des instructions respectivement associées, pour déterminer si l'indication (EAZ) respectivement formée lors de l'exécution d'instructions et actuellement valable, peut être encore modifiée jusqu'à l'exécution de l'instruction précisément interprétée, et
   - que dans le cas où une indication (EAZ) n'est plus modifiée, une instruction de branchement conditionnel devant être interprétée est traitée comme une instruction de branchement inconditionnel, et cette instruction est déjà contrôlée pendant la phase d'interprétation de l'instruction sur la base de l'indication présente (EAZ) pour déterminer si la condition de branchement est satisfaite ou non.

4. Procédé suivant la revendication 2 ou 3, caractérisé par le fait que pour m (m=3) étapes de traitement pipeline, qui succèdent à l'étape (IP) d'interprétation d'instructions jusqu'à l'exécution d'une instruction (n), les notifications de changement d'indication (CH-PAZ et CH-EAZ) d'au moins n-1 instructions préliminaires directes successives (n-2 et n-1) sont mémorisées.

5. Procédé suivant les revendications 3 et 4, caractérisé par le fait que dans le cas de la présence de l'indication (EAZ), qui est déclenchée par l'instruction la plus ancienne (n-3) faisant partie des instructions préliminaires (n-3, n-2, n-1), prévues en un nombre maximum m, déjà à la fin de la phase d'interprétation d'une instruction de branchement conditionnel (n), toujours seules n-1 notifications de changement d'indication (CH-EAZ) concernant les m-1 instructions préliminaires directement précédentes (n-2, n-1) sont évaluées pour la décision concernant la poursuite du traitement de l'instruction de branchement conditionnel, et qu'en fonction de la nouvelle indication (EAZ) produite par l'instruction préalable la plus ancienne (n-3), dans le cas d'une instruction de branchement conditionnel (n) devant être traitée en tant qu'instruction de branchement inconditionnel, une vérification est faite pour savoir si le branchement est satisfait ou non.

6. Procédé suivant l'une des revendications 1 à 5, caractérisé par le fait que les éléments de mémoire (EMFF-A/PMFF-A à EMFF-C/PMFF-C), qui reçoivent le nombre prédéterminé de notifications de changement d'indication (CH-PAZ et CH-EAZ) devant être mémorisées et forment respectivement des couples, sont associés directement, selon une séquence cyclique, aux différentes instructions.

7. Procédé suivant la revendication 6, caractérisé par le fait que la période de validité des notifications de changement d'indication (CH-EAZ et CH-PAZ), qui sont mémorisées dans les différents couples d'éléments de mémoire (E/PMFF-A à E/PMFF-C) peuvent être fixées respectivement séparément, indépendamment de la durée respective d'occupation des éléments de mémoire et en fonction uniquement de la poursuite du traitement des instructions.

8. Procédé suivant la revendication 6 ou 7, caractérisé par le fait que pour la détermination de la période respective de validité des différentes notifications mémorisées de changement d'indication (CH-EAZ et CH-PAZ), un signal (TRUESW), qui indique le traitement d'une instruction dans l'étape (AR) qui succède à l'étape (IP) d'interprétation de l'instruction, et un signal de fin (TREND) produit respectivement pendant le dernier des cycles de travail nécessaire pour l'exécution d'une instruction, coopèrent.

9. Procédé suivant l'une des revendications 1 à 5, caractérisé par le fait que les couples d'éléments de mémoire, qui reçoivent le nombre prédéterminé de notifications devant être mémorisées de changement d'indication (CH-EAZ et CH-PAZ) sont individuellement associées, séquentiellement, aux étapes de traitement du mode pipeline, qui succèdent à l'étape (p) d'interprétation d'instructions et chaque notification de changement d'indication est envoyée, d'un élément de mémoire au suivant, respectivement en fonction de la retransmission associée, à l'étape suivante de traitement.

10. Procédé suivant l'une des revendications 6 à 9, caractérisé par le fait que les impulsions de commande pour la mémorisation selon la séquence correcte de la notification respectivement valable de changement d'indication (CH-EAZ et CH-PAZ) et de sa préparation en temps opportun sont dérivées du signal (TRUESW), qui indique respectivement un traitement d'instructions dans l'étape de traitement (AR) qui succède à l'étape (IP) d'interprétation de l'instruction, en liaison avec des impulsions de cadence sélectionnées (CL1,CL2 et CL4) parmi les impulsions de cadence (CL1 à CL4) qui constituent les cycles de travail (EOZ).

11. Procédé suivant la revendication 10, caractérisé par le fait que dans le cas d'une instruction de branchement (n) devant être traitée comme une instruction de branchement conditionnel, l'obtention des impulsions de commande pour la mémorisation selon une séquence correcte et la préparation de la notification de changement d'indication (CH-EAZ ou CH-PAZ) devant être évaluée respectivement comme valable, est influencée par des signaux de commande (BED et BED.NERF), qui concernent l'instruction de branchement conditionnel.

12. Dispositif pour le traitement de branchement conditionnel dans des installations de traitement opérant selon le principe pipeline, comportant un processeur (PLU) de préparation des instructions pour les étapes de traitement : lecture d'instructions (LB), interprétation d'instructions (IP), calcul d'adresses (AR) et préparation de paramètres (PB), un processeur d'exécution d'instructions (EXU) pour l'exécution proprement dite (AF) des instructions et une mémoire tampon et de travail commune, et dans lequel, dans le cas d'une instruction de branchement inconditionnel non satisfaite, l'instruction linéairement suivante du programme est interprétée dans le cycle de travail suivant, et dans le cas d'une instruction de branchement inconditionnel satisfaite, pendant la phase suivante de calcul d'adresses tout d'abord l'adresse d'une instruction déclenchant la nouvelle branche de programme doit être calculée et cette instruction doit être lue à partir de la mémoire tampon et de travail avant de pouvoir être interprétée, tandis que le traitement d'instructions de branchement conditionnel dépend de l'indication, valable après l'exécution de l'instruction directement précédente, et selon lequel dans le cas d'une indication, qui tire son origine d'une instruction préliminaire et est présente déjà à l'instant de l'interprétation d'une instruction et n'est plus variable, l'instruction de branchement conditionnel est traitée comme une instruction de branchement inconditionnel,
caractérisé
- par des dispositifs (ADW, PAZ-GEN), couplés au dispositif (IDEC) pour l'interprétation de l'instruction,
-- pour le contrôle de la présence d'une instruction prédéterminée comportant des opérandes directement accessibles par un adressage direct ne nécessitant aucun calcul préalable de l'adresse, et pouvant être traités dans un cycle de travail,
-- pour la production d'un signal de notification de changement (CH-PAZ) en fonction de la présence d'une instruction prédéterminée, et
-- pour la détermination et la mémorisation de l'indication respectivement associée, en tant qu'indication préalablement calculée (PAZ)
- par un dispositif de contrôle d'indication (AZ-CONTROL) pour la mémorisation temporaire et l'évaluation de signaux de notification de changement (CH-PAZ), pour la production d'un signal de commande (PAZV), signalant l'indication (PAZ) comme valable, et
- par un dispositif d'évaluation d'instructions de branchement (B-CONTROL) comportant des dispositifs (045, U52 ou 041, U48) pour produire un signal de commande (sortie U47) indiquant l'exécution d'une instruction de branchement inconditionnel, à la place d'un signal de commande (sortie U48) indiquant l'exécution d'une instruction de branchement conditionnel, en fonction du signal de commande (PAZV) délivré par le dispositif de contrôle d'indication (AZ-CONTROL), et des dispositifs pour déterminer si l'instruction de branchement (n) devant être traitée comme une instruction de branchement inconditionnel est satisfaite ou non, en fonction de l'indication préalablement calculée (PAZ), ainsi que des dispositifs (U53, U54) pour convertir un signal (sortie U52) indiquant l'exécution d'une instruction de branchement inconditionnel, en un signal de commande (UNB-ERF) indiquant un branchement inconditionnel satisfait, ou bien en un signal de commande (UNB.NERF) indiquant un branchement inconditionnel non satisfait, en fonction de la détermination du fait que le branchement est satisfait ou non.

13. Dispositif suivant la revendication 12,
caractérisé
    - par des dispositifs supplémentaires (U31) prévus dans les dispositifs servant à déterminer l'indication préalablement calculée (PAZ), pour la production, pour chaque instruction interprétée, de signaux de notification de changement (CH-EAZ) concernant l'indication (EAZ) formée lors de l'exécution d'instructions,
    - par des dispositifs prévus dans le dispositif de contrôle d'indication (AZ-CONTROL), pour la mémorisation et l'évaluation également de ces notifications de changement d'indication (CH-EAZ) et pour la production d'un second signal de commande (EAZV) désignant comme valable l'indication (EAZ) formée dans le plan d'exécution des instructions, et
    - par des dispositifs (045, U47 ou 041, U48) prévus dans le dispositif d'évaluation d'instructions de branchement (B-CONTROL) pour la production d'un signal de commande (sortie de U47) indiquant l'exécution d'une instruction de branchement inconditionnel à la place du signal de commande (BED) indiquant l'exécution d'une instruction de branchement conditionnel, en fonction du second signal de commande (EAZV) délivré par le dispositif de contrôle d'indication (A-CONTROL),
    - par des dispositifs (VG1), qui sont prévus en supplément dans le dispositif d'évaluation d'instructions de branchement (B-CONTROL) pour déterminer, sur la base de l'indication valable (EAZ), si l'instruction de branchement conditionnel devant être traitée comme une instruction de branchement inconditionnel, est satisfaite ou non,
    - par des dispositifs (U50, U49) prévus en outre dans le dispositif d'évaluation d'instructions de branchement (B-CONTROL), pour le contrôle d'un signal (sortie de U47) indiquant l'exécution d'une instruction de branchement inconditionnel, dans un signal de commande (UNB.ERF) indiquant un branchement inconditionnel satisfait ou en un signal de commande (UNB.NERF) indiquant un branchement inconditionnel non satisfait, en fonction de la détermination du fait que le branchement est satisfait ou non.

14. Dispositif suivant la revendication 12 ou 13, caractérisé par le fait que le dispositif pour déterminer l'indication préalablement calculée (PAZ) est constitué par l'unité de calcul (ADW), qui n'est pas nécessaire lors du traitement des instructions prédéterminées dans la phase de calcul d'adresses, et par un générateur d'indications (PAZ-GEN), qui convertit les indications de résultat (AED-ANZ) de l'unité de calcul (ADW) en des indications (PAZ), en fonction de signaux (AZ-SEL...) qui caractérisent le type de l'instruction respectivement interprétée, et délivre les notifications de changement d'indication (CH-PAZ, CH-EAZ).

15. Dispositif suivant l'une des revendications 12 à 14, caractérisé par le fait que le dispositif d'évaluation d'instructions (B-CONTROL) possède en outre les dispositifs (VG2, U51) servant à déterminer si, dans le cas où une instruction de branchement conditionnel n est exécutée, le branchement est satisfait ou non, et pour produire un signal de commande correspondant (BED.NERF).

16. Dispositif suivant l'une des revendications 12 à 15, caractérisé par
    - un nombre prédéterminé d'étages à bascule de mémoire (PMFF-A à PMFF-C et EMFF-A à EMFF-C) pour la mémorisation respectivement de l'une des notifications produites de changement d'indication (CH-PAZ et CH-EAZ),
    - un compteur de sélection (SELC), que peuvent faire avancer cycliquement des impulsions de commande (CL-SLC) et qui sert à sélectionner respectivement l'un des couples d'étages à bascule (E/PMFF-A), formés par les étages à bascule de mémoire (PMFF-A et EMFF-A) qui se correspondent entre eux, pour le transfert d'une notification présente de changement d'indications (CH-PAZ et CH-EAZ) en fonction d'une cadence particulière de mémoire (CL-M),
    - des commutateurs de sélection (PMUX, EMUX), qui sont raccordés aux sorties des couples d'étages à bascule de mémoire (E/PMFF-A à E/PMFF-C), pour l'association des notifications de changement d'indications (CH-PAZ et CH-EAZ), concernant les mêmes indications (PAZ et EAZ), à la dernière ou à l'avant-dernière, etc. instruction préliminaire respective (LB ou VLB ou etc.),
    - un réseau combinatoire (U25, U26, 022 ou 021) , qui est raccordé aux sorties des commutateurs de sélection (PMUX, EMUX) et sert à produire les deux signaux de commande (PAZV ou EAZV) pour déclarer valable l'une des deux indications (PAZ ou EAZ), et
    - un dispositif de commande (STE) branché en amont pour la production des impulsions de commande

24

(CL-SELC et CL-M) pour les couples d'étages à bascule de mémoire (E/PMFF-A à E/PMFF-C) et le compteur de sélection (SELC) en fonction de signaux de commande (TRUESW, CL1, CL2 et CL4), qui apparaissent respectivement lors du traitement d'instructions dans le mode pipeline, et de signaux de commande (BED, PED.NERF), qui sont délivrés par le dispositif d'évaluation d'instructions de branchement (B-CONTROL) et concernent l'exécution d'une instruction de branchement conditionnel.

17. Dispositif suivant la revendication 16,
    caractérisé par
    - un compteur préalable (PAC), dont l'état de comptage est accru d'un pas lors de chaque instruction retransmise par l'étape (IP) d'interprétation d'instructions dans le mode pipeline, par une instruction de commande (CL-PAC) délivrée par le dispositif de commande (STE) branché en amont, et est réduit d'un pas lors de chaque instruction qui se termine dans l'étape d'exécution (AF),
    - un compteur de validité (VAC-A à VAC-C) qui est associé individuellement à chaque couple d'étages à bascule de mémoire (E/PMFF-A à E/PMFF-C) et peut être également sélectionné par le compteur de sélection (SELC) et sert à transférer l'état (3) du compteur, préparé respectivement par le compteur préalable (PAC), en fonction d'une impulsion de charge (L-VAC) délivrée par le dispositif de commande (STE) branché en amont, les états du compteur de charge de tous les compteurs de validité (VAC...) étant réduits également pas-à-pas par les impulsions de comptage rétrograde envoyées par le compteur préalable (PAC), et
    - des circuits de commutation (011 à 013) qui contrôlent respectivement l'état de comptage des compteurs de validité (VAC...) et qui, pour l'état du compteur "0", bloquent les signaux de sortie des étages à bascule de mémoire associés (MFF-A).

18. Dispositif suivant l'une des revendications 12 à 15, caractérisé par
    - un nombre prédéterminé (deux) de couples d'étages à bascule de mémoire (E/PFF-A1 et E/PFF-B), qui sont branchés en série avec un registre à décalage commandé de façon cadencée par des impulsions de cadence (CL-FF) et à l'entrée duquel sont envoyées les notifications de changement d'indication (CH-EAZ et CH-PAZ),
    - un réseau combinatoire (U86, U87, 083 ou 082), raccordé aux sorties des différents couples d'étages à bascule de mémoire (E/PFF-A1 et E/PFF-B), pour la production des deux signaux de commande (PAZV ou EAZV) pour désigner la validité de l'une des deux indications (PAZ ou EAZ),
    - un autre couple d'étages à bascule de mémoire (E/PFF-A2), qui est branché en parallèle avec le premier couple d'étages à bascule de mémoire (E/PFF-A1) du dispositif de registre à décalage,
    - par un commutateur de sélection (MUX) servant à relier le premier couple d'étages à bascule de mémoire (E/PFF-A1) ou du couple d'étages à bascule (E/PFF-A2), branché en parallèle avec le précédent, au second couple d'étages à bascule (E/PFF-B) du dispositif de registres à décalage,
    - un dispositif d'inversion de commande (U82 à U85) pour commuter la notification présente de changement d'indication (CH-EAZ, CH-PAZ) sur l'entrée du couple d'étages à bascule (P/EFF-A2), branché en parallèle avec le premier couple d'étages à bascule du dispositif de registres à décalage, en fonction d'un signal de commande de commutation (SEL), et
    - un dispositif de commande (STE') branché en amont et servant à produire les impulsions de cadence (CL-FF) et le signal de commande de commutation (SEL) en fonction de signaux de commande (TRUESW, CL1, CL4), qui apparaissent respectivement lors du traitement d'instructions dans le mode pipeline, et en fonction de signaux de commande (BED, BED.NERF), qui sont délivrés par le dispositif (B-CONTROL) d'évaluation d'instructions de branchement et concernent l'exécution d'une instruction de branchement conditionnel (n).

19. Dispositif suivant l'une des revendications 16 à 18, caractérisé par le fait que
    - le dispositif de commande branché en amont (STE ou STE') possède une série d'étages à bascule (M-FF1 à M-FF4 ou M-FF1 à M-FF3) branchés en série,
    - le signal de commande (BED), qui indique l'exécution d'une instruction de branchement conditionnel, est envoyé au premier étage à bascule de marquage (M-FF1) et est mémorisé par ce dernier en même temps qu'intervient le traitement de l'instruction de branchement associée (n), qui est exécuté par l'étape de traitement (AR) qui succède à l'étape (IP) d'interprétation de l'instruction,
    - que le signal (BED) mémorisé dans le premier étage à bascule de marquage (M-FF1), est retransmis respectivement avec chaque instruction suivante (par exemple n+1a), qui est en cours de traitement par l'étape de traitement (AR) qui succède à l'étape (IP) d'interprétation de l'instruction, en synchro-

25

nisme avec les cycles de travail (EOZ) du traitement pipeline, de l'étage à bascule de marquage (M-FF2) à l'étage à bascule de marquage (M-FF3), et

- qu'en fonction de l'état respectif de positionnement du second étage à bascule de marquage et des autres (M-FF2 et M-FF3), des circuits combinatoires délivrent les signaux de cadence et de commande, qui sont nécessaires pour la commande des étages à bascule de mémoire (P/EFF-A1 et P/EFF-B), selon la séquence respectivement nécessaire.

# FIG 1

# FIG 2

# FIG 3

AAD-ANZ

ANZ-LOG

BK0

AZ-SEL0

AZ-SEL1

AZ-SEL2

D
C

PAZ0

D
C

PAZ1

}PAZ

BK1

OR

≥1

&
U32

CH-PAZ

&
U31

CH-EAZ

CL-PAZ

# FIG 4

BCR

| OP | M | R2 |
|---|---|---|

0          7 8    11 12    15

| OP | M | X2 | B2 | D2 |
|---|---|---|---|---|

0   /      7 8    11 12    15 16    19 20                    31

BC

FIG 5

FIG 6A

# FIG 6B

FIG 6C

# FIG 7

# FIG 8

FIG 9

# FIG 10

# FIG 11